(19) Europäisches Patentamt

European Patent Office

Office européen des brevets

(11) EP 0 729 213 B1

(12) **EUROPÄISCHE PATENTSCHRIFT**

(45) Veröffentlichungstag und Bekanntmachung des Hinweises auf die Patenterteilung:
**15.04.1998   Patentblatt 1998/16**

(51) Int Cl.⁶: **H02J 13/00**

(21) Anmeldenummer: **95114366.8**

(22) Anmeldetag: **13.09.1995**

(54) **Anordnung mit einem Rundsteuersender und einer dem Rundsteuersender nachgeschalteten Netzankopplung**

Device with an omnidirectional master transmitter and an apparatus for coupling the electricity distribution network with the multidirectional master transmitter

Dispositif ayant un émetteur pilote omni-directionnel et appareil pour couplage du réseau de distribution électrique avec l'émetteur pilote omni-directionnel

(84) Benannte Vertragsstaaten:
**AT BE CH DE FR LI NL SE**

(30) Priorität: **24.02.1995  CH 535/95**

(43) Veröffentlichungstag der Anmeldung:
**28.08.1996   Patentblatt 1996/35**

(73) Patentinhaber: **Landis & Gyr Technology Innovation AG**
**6301 Zug (CH)**

(72) Erfinder:
- **Ulmi, Remo**
  **CH-6331 Hünenberg (CH)**
- **Dafflon, Roger**
  **CH-6300 Zug (CH)**
- **Gruber, Peter**
  **CH-8909 Zwillikon (CH)**

(56) Entgegenhaltungen:
**AT-A- 331 904        DE-U- 9 314 866**
**US-A- 4 558 177**

- **ELEKTROTECHNISCHE ZEITSCHRIFT - ETZ, vol.112, no.22, November 1991, BERLIN DE pages 1228 - 1231 S.LINZ ET AL 'RUNDSTEUERSENDER MIT LEISTUNGSTRANSISTOREN'**
- **ELEKTRIZITAETWIRTSCHAFT, vol.70, no.9, 1971, GERMANY pages 237 - 241 K.WEGENER ET AL 'EIN NEUER RUNDSTEUERSENDER'**
- **BBC-NACHRICHTEN, vol.59, no.8/9, 1977 pages 388 - 395 N.LUNKENBEIN 'RICONTIC-RUNCSTEUERSENDEANLAGEN-BINDEGLIED ZWISCHEN INFORMATIONS-UND VERSORGUNGSEBENE'**

**Beschreibung**

Die Erfindung bezieht sich auf eine Anordnung mit einem Rundsteuersender und einer dem Rundsteuersender nachgeschalteten Netzankopplung gemäss dem Oberbegriff des Anspruchs 1.

Die Anordnung wird bei Rundsteuerung verwendet, in der bekanntlich Informationen in Gestalt tonfrequenter Impulse von in der Regel mehreren räumlich verteilt angeordneten Unterstationen über ein elektrisches Energieversorgungsnetz zu einer Vielzahl von Rundsteuerempfängern übertragen werden. Die letzteren sind räumlich verteilt über das gesamte Versorgungsgebiet eines Energieversorgungs-Unternehmens angeordnet am Energieversorgungsnetz angeschlossen. Die übertragenen Informationen dienen dabei in der Regel zum Ein- oder Ausschalten elektrischer Lasten, d. h. dem sogenannten "Load Management".

Ein Anordnung der eingangs genannten Art ist aus der deutschen Gebrauchsmuster-Veröffentlichung G 93 14 866.6 U1 bekannt, in der eine Rundsteueranlage beschrieben ist, in der eine Steuereinrichtung über einen beliebigen Übertragungsweg mit einer Rundsteuersendeanlage verbunden ist, die einen Rundsteuersender und eine nachgeschaltete Netzankopplung enthält. Die letztere verbindet den Rundsteuersender mit einem elektrischen Energieversorgungsnetz, an dem Rundsteuerempfänger angeschlossen sind. In der Rundsteuersendeanlage ist ein Zeitzeichenempfänger vorhanden, welcher zum Empfang von Zeitzeichensignalen geeignet ist, welche z. B. von einem Satelliten gesendet werden. In einer Variante der bekannten Anordnung ist unmittelbar am Standort der Rundsteuersendeanlage eine einen Spannungswandler aufweisende Erfassungseinrichtung vorhanden zum Messen eines dort vorliegenden Rundsteuerpegels. Das Ausgangssignal der Erfassungseinrichtung wird über eine Unterstation einer Steuereinrichtung zurückgeführt, die die zentrale Steuereinrichtung und/oder die Unterstation sein kann, wo dann das Ausgangssignal aufbereitet und ausgewertet wird. Das letztere wird dabei mit einem vorgebbaren Pegel verglichen. Bei Abweichungen erfolgt eine automatische Korrektur des Rundsteuerpegels. Die Steuereinrichtung beinhaltet somit eine automatische Regelung, in der die Rundsteuersendeanlage mit der Signalrückführung einen geschlossenen Regelkreis bildet, der in der betreffenden Variante der bekannten Anordnung die Höhe des Rundsteuerpegels überwacht und nachführt. Die automatische Regelnachführung erfolgt bevorzugt mittels eines Rechners, der Algorithmen mit gewichteten Merkmalen verarbeitet, und veranlasst, dass im Energieversorgungsnetz ein gleichmässiger Rundsteuerpegel herrscht. Der Rundsteuer-Nutzpegel wird somit fortlaufend den kontinuierlichen und/oder sporadischen Schwankungen des Energieversorgungsnetzes angepasst.

- Wenn aus Kosten- oder anderen Gründen nur ein einziger Regelkreis und kein zweiter z. B. untergeordneter Regelkreis verwendet werden soll,
- wenn, z. B. aus Zeitersparnisgründen und/oder zum Zweck der Erzielung einer maximalen Übertragungskapazität während einer vorgegebenen Übertragungszeit, z. B. während einer Telegrammdauer, eine schnelle Informationsübertragung mit schmalbandigen Bandpassfiltern und/oder kurzen Rundsteuerimpulsen, z. B. der Dauer 110 ms, erwünscht ist,
- wenn die Regelung des Sendepegels idealer Weise vollständig innerhalb der Impulsdauer eines jeden Rundsteuerimpulses erfolgen soll und/oder
- wenn der Sendepegel eines Rundsteuerimpulses nicht aufgrund eines vorhergehend gesendeten Impulspegels, z. B. eines Startimpuls-Pegels, ermittelt werden kann,

    - sei es, dass dies bei einem ungenügenden Sendepegel zu langen Wartezeiten, gleich der Telegrammzeit, und in der Zwischenzeit zu einem Fehlverhalten mindestens eines Teils der Rundsteuerempfänger führen kann, weil diese einen ungenügenden Impulspegel empfangen, oder
    - sei es, dass dies bei einem einigermassen ausreichenden Sendepegel zu einem Fehlverhalten gewisser Rundsteuerempfänger führen kann, die ihre Empfindlichkeit und die von ihnen erwartete Impulslängen auf Grund eines empfangenen Startimpuls-Pegels festlegen,

    was später noch näher erläutert werden wird,

ist die Verwendung der bekannten Anordnung problematisch und mit Schwierigkeiten verbunden, was ihre Verwendung stark einschränkt, wie aus nachfolgenden Erläuterungen ersichtlich ist.

Es ist allgemein bekannt, dass die Rundsteuer-Netzankopplungen Filtercharakter besitzen, als Bandpassfilter ausgebildet sind und dementsprechend in der Regel Bandpassfilter enthalten. Ausserdem ist allgemein bekannt, dass die oben erwähnte Erfassungseinrichtung in irgend einer Form eine bandpassfilterähnliche Anordnung enthalten muss, wie z. B. ein Analog-Filter, ein Digital-Filter, ein SC-Filter ("Switched Capacitor filter": Filter geschalteter Kapazitäten), ein FFT-Filter ("Fast Fourier Transform filter": "Schnelle Fourier Transformation"-Filter), ein DFT-Filter ("Diskrete Fourier Transform filter": "Diskrete Fourier Transformation"-Filter) und/oder ein FTT-Filter ("Fourier Time Transformation filter": "Fourier Zeit Transformation"-Filter), zwecks Herausfilterung des tonfrequenten Rundsteuersignals und Trennung desselben von der am Ausgang der Netzankopplung vorhandenen 50Hz-Spannung und deren Oberwellen. Dies geschieht am einfachsten mittels eines Bandpassfilters, welches zwischen dem Spannungswandler und dem Rechner angeordnet ist. Im Regelkreis ist die bandpassfilterähnliche Anordnung in Reihe hinter den Bandpassfiltern der Netzankopplung angeordnet, so dass der Regelkreis eine relativ grosse Zeitkonstante und somit relativ grosse Einschwingzeiten besitzt, was problematisch ist und jede sinnvolle Spannungs-Regelung stark erschwert, vor allem wenn diese innerhalb eines kurzen Rundsteuerimpulses erfolgen soll. Da dabei ausserdem eine transiente Änderung des Eingangsstromes der Netzankopplung nur kurzfristig eine relativ kleine Änderung der geregelten Ausgangsspannung der Netzankopplung ergibt, zieht die Netzankopplung einen relativ wirkungslosen grossen Eingangsstrom aus dem Rundsteuersender, der diesen grossen Eingangsstrom liefern muss und dementsprechend dimensioniert sein muss. Insbesondere müssen dann die Starkstrom-Halbleiterbauelemente des Rundsteuersenders strommässig überdimensiert ausgelegt werden, was die Rundsteuersender sehr stark verteuert und zur Verwendung von leistungsmässig überdimensionierten Rundsteuersendern führt. Die Überdimensionierung der Starkstrom-Halbleiterbauelemente ist auch deshalb besonders unangenehm, da die in den Rundsteuersendern verwendeten modernen Starkstrom-Halbleiterbauelemente, z. B. IGBT, kein so gutes Überlastverhalten aufweisen wie ältere Starkstrom-Halbleiterbauelemente, z. B. wie die früher verwendeten Frequenzthyristoren.

Neben der stationär benötigten Sendeleistung wird die Leistungsgrösse eines Rundsteuersenders auch durch die transienten Ausgangsströme des Rundsteuersenders, d.h. durch die Eingangs-Einschwingströme der Ankopplung zu Beginn eines jeden Rundsteuerimpulses bestimmt. Diese Einschwingwerte können dabei bekanntlich ein Vielfaches des stationären Wertes betragen. Bei der Speisung der Netzankopplung mit einer konstanten Spannung vergrössern sich durch die Anwesenheit der in Reihe geschalten Bandfilter nicht nur die Einschwingzeiten, sondern auch die Überschwingungen des Netzankopplung-Eingangsstromes zu Beginn eines jeden Rundsteuerimpulses. Die Überschwingungen sind dabei von der Verstimmung der Bandpassfilter sowie deren teils variablen Lasten abhängig. Die Überschwingungen, deren Betrag, wie bereits erwähnt, ein Vielfaches des stationnären Wertes betragen kann, erfordert eine weitere zusätzliche strommässige Überdimensionierung der Starkstrom-Halbleiterbauelemente der Rundsteuersender. Die letzteren werden zusätzlich verteuert und leistungsmässig noch weiter überdimensioniert. Ausserdem wird wegen der Einschwingzeiten der eingeschwungene Pegel des Rundsteuerimpulses nicht mehr innerhalb der Impulsdauer erreicht, was dessen Messung und Regelung innerhalb der Impulsdauer verunmöglicht. Dies ist besonders kritisch bei der Verwendung von sehr kurzen Rundsteuerimpulsen und/oder von Bandpassfiltern mit sehr kleinen Bandbreiten.

Eine Methode zur Lösung des Einschwingproblems wäre, den Sollwert des Reglers während einer jeden Impuls-Einschwingzeit rampenförmig hochzufahren. Diese an sich sehr einfache Methode kann jedoch, je nach Verstimmung der Bandpassfilter, z. B. bei sehr kleinen nach Null strebenden Bandbreiten der Bandpassfilter, nicht immer Regelungsschwingungen verhindern, so dass die Netzankopplung mindestens während der Regelschwingungen einen grösseren Eingangsstrom zieht und der Rundsteuersender dafür überdimensioniert werden müsste.

Eine weitere Methode zur Lösung eines Teils der Probleme wäre ein Startimpuls des Rundsteuertelegramms mit einem nicht zu grossen Pegel zu senden. Der Startimpuls ist bei den meisten Rundsteuertelegrammen länger als die anderen Rundsteuerimpulse, so dass während seiner Impulsdauer von z. B. 460 ms in der Regel genügend Zeit vorhanden ist zur Ermittlung des eingeschwungenen Pegels des Startimpulses. Die längere Messzeit würde ausserdem den Messaufwand reduzieren. Aufgrund des während des Startimpulses ermittelten Pegelwertes könnte dann der notwendige Pegel der nachfolgenden kürzeren Rundsteuerimpulse vorgegegeben werden und diese könnten dann mit dem betreffenden Pegel gesendet werden. Der Sendepegel des Startimpulses kann dabei anhand von Erfahrungswerten, wie z. B. eines vorher zuletzt gesendete Impulspegels, und/oder von anderen Einflussgrössen bzw. Randbedingungen gewählt werden, wie z. B. einer Temperatur und/oder ob die Sendung an einem Werk- oder Feiertag bzw. im Winter oder Sommer erfolgt. Diese Methode hat den Nachteil, dass bei einem ungenügenden Sendepegel die volle Zeit eines Impulstelegrammes, d.h. z.B. 30 Sekunden, abgewartet werden muss, bevor wieder ein Startimpuls, diesmal mit einem höheren Pegel, gesendet werden kann. In der Zwischenzeit versteht nur ein Teil der Rundsteuerempfänger wegen des zu geringen Sendepegels die gesendete Information richtig, während ein weiterer Teil sie falsch interpretiert oder erst gar nicht empfängt. Ein weiterer Nachteil ist, dass, wenn der Pegel des Startimpulses noch einigermassen ausreichend gross war, der Pegel der nachfolgenden Rundsteuerimpulse in der Regel nur beschränkt, innerhalb gewisser Grenzen, gesteigert werden kann, da gewisse Rundsteuerempfänger ihre Empfindlichkeit und die zu erwartende Impulslänge auf Grund des empfangenen Startimpuls-Pegels festlegen, da angenommen wird, dass sich das Netzverhalten während eines Rundsteuer-Telegramms nicht nennenwert ändert und somit die empfangenen tonfrequenten Rundsteuerpegel während des ganzen Rundsteuer-Telegramms annähernd konstant bleiben. Eine Erhöhung des Sendepegels nach dem Startimpuls, z. B. weil dieser während des Startimpulses als zu schwach erkannt wurde, könnte dann zu einem Fehlverhalten dieser Rundsteuerempfänger führen, z. B. infolge von übersteuerten internen Filterstufen desselben oder infolge einer falsch erwarteten Impulslänge.

Der Erfindung liegt die Aufgabe zugrunde, eine Anordnung der eingangs genannten Art so zu verbessern, dass sie, unter Berücksichtigung der oben angegebenen Bedingungen, die aufgelisteten Schwierigkeiten vermeidet und insbesondere folgende Vorteile besitzt:

- Kostengünstige Auslegung der Rundsteuersender und deren Starkstrom-Halbleiterbauelemente für eine reduzierte Sendeleistung und Vermeidung einer Überdimensionierung sowohl des Rundsteuersenders als auch der Starkstrom-Halbleiterbauelemente.
- Genügender Sendepegel für eine fehlerarme Übertragung der Rundsteuersignale und Begrenzung des Sendepegels nach oben hin, und zwar beides bei jeder Netzlast.
- Vermeidung der Zeitkonstanten der in Reihe geschalteten Bandpassfilter im Regelkreis.
- Verkleinerung der Überschwingungen der Eingangsströme der Netzankopplung und deren Begrenzung im Idealfall auf die Werte des stationären Betriebs mit der Möglichkeit einerseits Impulspegel innerhalb der Dauer eines jeden Rundsteuerimpulses zu ermitteln und zu regeln sowie anderseits den Rundsteuersender für eine zusätzlich reduzierte Sendeleistung auszulegen.
- Möglichkeit die durch die Begrenzung der transienten Eingangsströme auf ihren stationären Wert verursachten, gegenüber dem ungeregelten Betrieb verlangsamten Anstiegszeiten der auf dem Energieversorgungsnetz vorhandenen Rundsteuerspannung durch ein kurzzeitiges Anheben des Sollwertes über den stationären Sollwert und/oder ein kurzzeitiges Anheben von Parameterwerten des Reglers über dessen stationäre Werte wieder zu verbessern und dadurch eine Sättigung des Eisenkerns eines fakultativ am Ausgang des Rundsteuersenders vorhandenen Transformators zu vermeiden.
- Verwendung von Pegelsensoren, die aus anderen Gründen (z. B. Überstromüberwachung) in der Regel bereits sowieso im Rundsteuersender vorhanden sind und dadurch eine weitere Verbilligung der letzteren.
- Begrenzung der Grösse der Hochspannungselemente der Netzankopplung und damit eine Reduktion von deren Preis.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben. Es zeigen:

Fig. 1    ein Blockschaltbild einer ersten Variante einer erfindungsgemässen dreiphasigen Anordnung,
Fig. 2    ein Blockschaltbild einer zweiten Variante der erfindungsgemässen dreiphasigen Anordnung,
Fig. 3    ein Schaltbild einer Phase einer Serie-Ankopplung,
Fig. 4    ein Blockschaltbild eines zur ersten Variante gehörenden Schätzwertermittlers,
Fig. 5    ein Blockschaltbild eines zur zweiten Variante gehörenden Schätzwertermittlers und
Fig. 6    ein Blockschaltbild eines PI-Reglers.

Die erfindungsgemässe Anordnung enthält in allen Varianten einen Rundsteuersender 1 und eine dem Rundsteuersender 1 nachgeschaltete Netzankopplung 2 zur Ankopplung des Rundsteuersenders 1 an ein elektrisches Energieversorgungsnetz 3, vorzugsweise an eine Mittelspannungs- oder Hochspannungsebene desselben, dessen drei Phasen mit R, S und T bezeichnet sind. Erfindungsgemäss ist ein Ausgang eines eingangsseitig an einem Ausgang des Rundsteuersenders 1 angeschlossenen Stromsensors 4 über ein Tonfrequenzpegel-Messgerät 5 auf einen Istwert-Eingang 6 eines mit einem Sollwert-Eingang 7 versehenen Reglers 8 geführt. Die Bauelemente 1, 4, 5 und 8 bilden zusammen einen Strom-Regelkreis 1;4;5;8. Die Vorteile seines Vorhandenseins werden später erläutert. Der Regler 8 enthält ein Sollwert/Istwert-Subtraktionsglied 8a, dem ein Regelverstärker 8b nachgeschaltet ist. Im Sollwert/Istwert-Subtraktionsglied 8a wird eine Differenz zwischen einem in der Regel einstellbaren Sollwert SW und einem Istwert gebildet. In der Zeichnung ist daher der Sollwert-Eingang 7 jeweils mit einem Plus-Zeichen und der Istwert-Eingang 6 mit einem Minus-Zeichen gekennzeichnet. Der Regler 8 regelt den Istwert, d. h. den Pegel eines mittels des Stromsensors 4 ermittelten Ausgangsstroms des Rundsteuersenders 1 auf einen Wert, der im eingeschwungenen Zustand des Regelkreises 1;4;5;8 gleich dem eingestellten Sollwert SW ist und zwar unabhängig davon, ob das Energieversorgungsnetz 3 eine ohmische, induktive oder kapazitive Last, eine Vollast oder eine Schwachlast aufweist. Ein Ausgang des Reglers 8 ist mit einem Steuereingang 9 des Rundsteuersenders 1 verbunden, mit dessen Hilfe ein Ausgangsstrom des Rundsteuersenders 1 einstellbar ist. Der Stromsensor 4 ist seriell zum Ausgang des Rundsteuersenders 1 und somit zwischen dem Rundsteuersender 1 und der Netzankopplung 2 angeordnet. Er ist z. B. ein Shunt oder, bevorzugt, ein Stromwandler, dessen Primärwicklung seriell zum Ausgang des Rundsteuersenders 1 angeordnet ist und dessen Sekundärwicklung den Ausgang des Stromsensors 4 bildet.

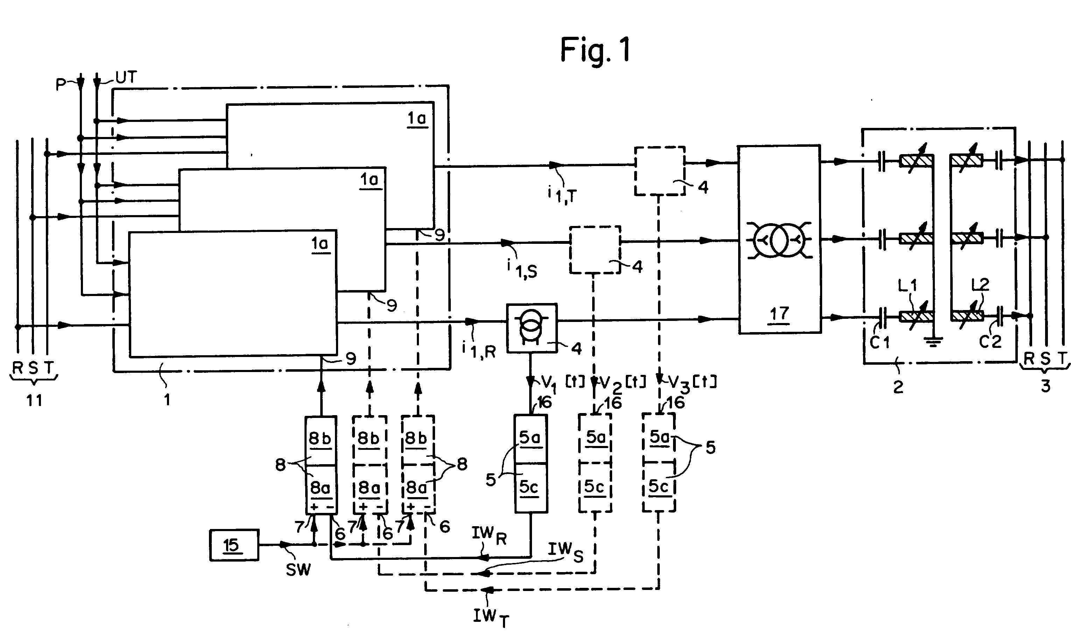

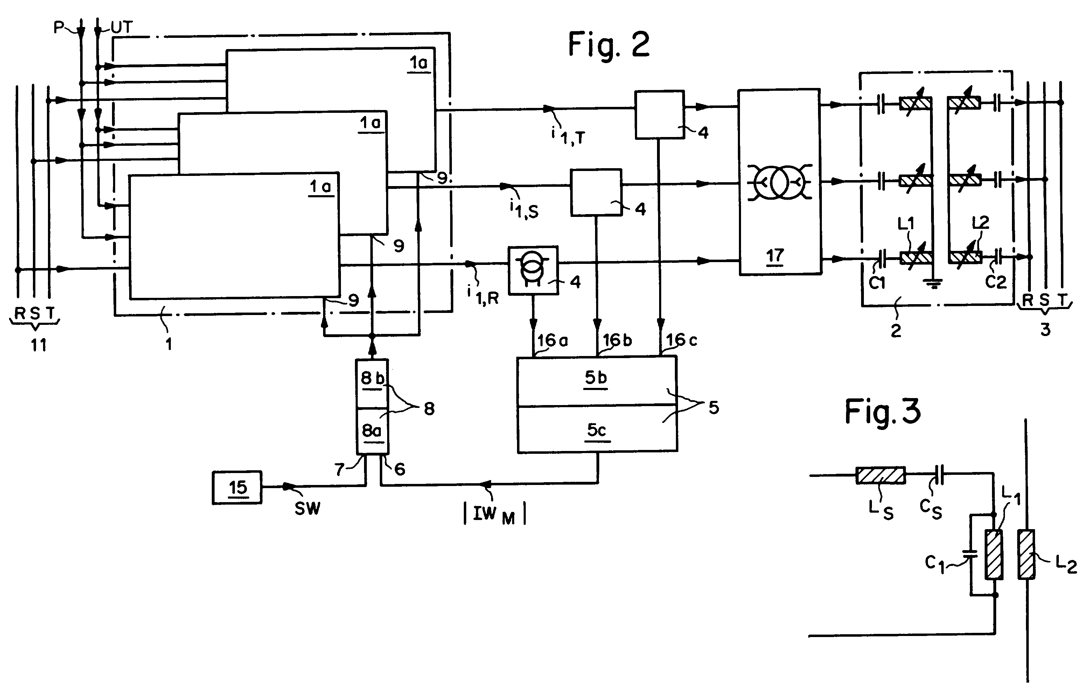

Bei einer mehrphasigen erfindungsgemässen Anordnung ist der Rundsteuersender 1 entweder ein mehrphasiger Rundsteuersender, der je einen Steuereingang 9 pro Phase aufweist, oder er besteht aus je einem einphasigen Rundsteuersender 1a pro Phase, der jeweils einen Steuereingang 9 aufweist. Letzteres wurde in den dreiphasigen, in den Figuren 1 und 2 dargestellten Anordnungen angenommen. Im diesem Fall speist ein dreiphasiges Niederspannungs-Energieversorgungsnetz 11 mit je einer seiner Phasen R, S oder T einen von drei einphasigen Rundsteuersender 1a mit einer niederfrequenten Niederspannung der Frequenz $f_1 = 50$ Hz. Die Niederspannung wird im Rundsteuersender 1 bzw. 1a in ein Signal umgewandelt, dessen Frequenz eine Tonfrequenz $f_2$ ist. Zu diesem Zweck enthält jede Phase des Rundsteuersenders 1 bzw. jeder einphasige Rundsteuersender 1a einen tastbaren Frequenzumformer, der ausser von einer Phase R bzw. S bzw. T des Niederspannungs-Energieversorgungsnetzes 11 noch von einem für alle Phasen gemeinsamen Pilot- und/oder Zeitsignal P der Frequenz $f_2$ sowie von einem für alle Phasen gemeinsamen Tastsignal UT gespeist werden kann. In der Rundsteueranlage wird z.B. ein für alle Rundsteuersender 1 gemeinsames Pilot- und/oder Zeitsignal P verwendet, welches eine synchrone Erzeugung der Tonfrequenz $f_2$ in einer Vielzahl von an das Energieversorgungsnetz 3 angeschlossenen Rundsteuersendern 1 ermöglicht, so dass die Einflüsse derer Sendesignale sich im z.B. vermaschten Energieversorgungsnetz 3 unterstützen und nicht gegenseitig aufheben. Das Vorhandensein des Pilot- und/oder Zeitsignals P ist jedoch keine unbedingt notwendige Voraussetzung für das Funktionieren der erfindungsgemässen Anordnung. Diese Rundsteuersender 1 befinden sich dabei in der Regel in mehreren räumlich verteilt angeordneten Unterstationen. Das gemeinsame Pilot- und/oder Zeitsignal wird entweder von einer für alle Rundsteuersender 1 gemeinsamen Zentrale über einen beliebigen Übertragungsweg oder, wie in der G 93 14 866.6 U1 angegeben, per Funk von einem Satelliten, z. B. einem GPS-Satelliten, zu den verschiedenen Rundsteuersender 1 der Rundsteueranlage übertragen. Das Tastsignal UT besteht aus einer Reihe von Gleichspannungs-Impulsen, wovon der erste Impuls ein Startimpuls ist und die anderen Impulse zusammen eine kodierte und/oder unkodierte von der Rundsteuerung zu übertragende Information beinhalten. Alle Rundsteuersender 1 einer Rundsteueranlage erhalten die zu übertragende Information, d. h. das Tastsignal UT, über beliebige Übertragungswege, z. B. Telephon- oder Standleitungen, vorzugsweise von einer für alle Unterstationen gemeinsamen Zentrale. Die vom tastbaren Frequenzumformer erzeugte Tonfrequenz $f_2$ wird jeweils mittels des Tastsignals UT getastet, so dass an seinem Ausgang ein Rundsteuertelegramm erscheint, welches aus tonfrequenten Impulsen besteht. Der Ausgang des tastbaren Frequenzumformers bildet jeweils den zur betreffenden Phase gehörigen Rundsteuersender-Ausgang, der somit eine Phase des mehrphasigen-Ausgangs des Rundsteuersenders 1 darstellt. Ein Steuereingang des tastbaren Frequenzumformers bildet den Steuereingang 9 der betreffenden Phase des Rundsteuersenders 1 Mittels der am Steuereingang 9 anstehenden Ausgangsspannung des Reglers 8 wird die Ausgangsspannung des tastbaren Frequenzumformers und damit die Ausgangsspannung der betreffenden Phase des Rundsteuersenders 1 verstellt und geregelt, was eine Änderung und Regelung des Ausgangsstromes $i_{1,R}$ bzw. $i_{1,S}$ bzw. $i_{1,T}$ des Rundsteuersenders 1 zur Folge hat.

Bei mehrphasigen Anordnungen ist die Netzankopplung 2 ebenfalls entweder eine mehrphasige Netzankopplung oder sie besteht aus je einer einphasigen Netzankopplung pro Phase. Die Netzankopplung 2 ist z. B. ein serielle Shunt-Ankopplung, eine parallele Starr-Ankopplung oder, bevorzugt, eine Serie-Ankopplung oder eine lose Parallel-Ankopplung. Nachfolgend gilt zunächst, dass letzteres der Fall ist (siehe Fig. 1 oder Fig. 2).

Die Netzankopplung 2 sorgt jeweils für eine Potentialtrennung zwischen dem Rundsteuersender 1 und Niederspannungs-Energieversorgungsnetz 11 einerseits und dem Energieversorgungsnetz 3 anderseits. Ausserdem sorgt sie dafür, dass tonfrequente Rundsteuersignale ins Energieversorgungsnetz 3 gelangen. Umgekehrt verhindert sie grössten Teils, dass 50 Hz-Signale und/oder deren Oberwellen vom Energieversorgungsnetz 3 in den Rundsteuersender 1 gelangen. Zum letzteren Zweck enthält die Netzankopplung 2 oft, wie bereits erwähnt, eine Kombination von Bandpassfiltern. Falls die Netzankopplung 2 eine lose Parallel-Ankopplung ist, enthält sie pro Phase zwei gekoppelte Bandpassfilter, deren Mittenfrequenzen gegenüber der Tonfrequenz $f_2$ verstimmbar sind. Die Bandpassfilter sind bei der losen Parallel-Ankopplung vorzugsweise Reihenresonanzkreise $L_1;C_1$ bzw. $L_2;C_2$, die jeweils aus einer Reihenschaltung einer Induktivität $L_1$ bzw. $L_2$ und eines Kondensators $C_1$ bzw. $C_2$ bestehen. Dabei sind die Spulen der vorzugsweise einstellbaren Induktivitäten $L_1$ und $L_2$ induktiv lose miteinander gekoppelt. Der mit dem Ausgang des Rundsteuersenders 1 über einen Stromsensor 4 verbundene Resonanzkreis $L_1;C_1$ ist ein primärseitiger Niederspannungs-Schaltkreis und der mit dem Energieversorgungsnetz 3 unmittelbar verbundene Resonanzkreis $L_2;C_2$ ein sekundärseitiger Hochspannungs- bzw. Mittelspannungs-Schaltkreis der Netzankopplung 2. Die Verstimmung der Bandpassfilter, hauptsächlich niederspannungsseitig, erzeugt bezüglich der Rückwirkung der 50 Hz-Signale und deren Oberwellen zwischen dem Rundsteuersender 1 und dem Energieversorgungsnetz 3 eine stärkere Entkopplung als die anderen Ankopplungstypen. Dieser Vorteil wird jedoch bei der losen Parallel-Ankopplung durch ein inverses Verhalten der Netzankopplung 2 erkauft, d. h. der Rundsteuersender 1 sieht eine inverse Last, nämlich z. B. eine minimale Impedanz (Vollast) bei einer maximalen Impedanz (Schwachlast) des Energieversorgungsnetzes 3. Der Rundsteuersender 1 muss somit infolge der innerhalb eines Tages oder einer Woche in der Regel sehr starken Lastschwankungen des Energieversorgungsnetzes 3 überflüssigerweise überdimensioniert werden, um auch bei minimaler Impedanz noch genügend Sendeleistung zu erzeugen. Bei einer dreiphasigen Anordnung sind die Spulen der Induktivitäten $L_1$ aller drei Phasen z. B. sternförmig geschaltet, wobei der Sternpunkt z. B. an Erde oder Masse liegt. Die Spulen der Induktivitäten $L_2$ aller drei Phasen sind z. B. ebenfalls sternförmig geschaltet. Die drei primärseitigen Reihenresonanzkreise $L_1;C_1$ bilden dann einen dreiphasigen Eingangskreis und die drei sekundärseitigen Reihenresonanzkreise $L_2;C_2$ einen parallel an das Energieversorgungsnetz 3 angeschlossenen dreiphasigen Ausgangskreis der dreiphasigen Netzankopplung 2.

Statt der losen Parallel-Ankopplung kann, wie bereits erwähnt, für die Netzankopplung 2 auch eine Serie-Ankopplung verwendet werden, die zwar kein ausgeprägtes inverses Verhalten, jedoch ein ähnliches transientes und stationäres Verhalten aufweist wie die lose Parallel-Ankopplung, so dass sich ähnlich wie bei deren Verwendung auch bei der Verwendung der Serie-Ankopplung eine Reduktion der benötigten Sendeleistung ergibt. Wenn die Netzankopplung 2 eine Serie-Ankopplung ist, sind in jeder Phase, wie aus der Fig. 3 ersichtlich, die Induktivität $L_1$ und der Kondensator $C_1$ parallel geschaltet und ein Reihenresonanzkreis $L_S;C_S$ ist in jeder Phase in Reihe zu der Parallelschaltung $L_1;C_1$ zusätzlich angeordnet. Der Reihenresonanzkreis $L_S;C_S$ enthält eine Induktivität $L_S$ und einen Kondensator $C_S$, die beide in Reihe geschaltet sind. Der Kondensator $C_2$ fehlt in jeder Phase. In einer Dreiphasen-Anordnung sind die Spulen der drei Induktivitäten $L_2$ ohne Kondensator $C_2$ seriell im Leiter der zugehörigen Phase R, S oder T des Energieversorgungsnetzes 3 angeordnet.

In einer ersten Untervariante der ersten Variante (siehe Fig. 1) sind bei der mehrphasigen Anordnung je ein Stromsensor 4, je ein Tonfrequenzpegel-Messgerät 5 und je ein Regler 8 pro Phase vorhanden. In diesem Fall sind die Ausgänge der Stromsensoren 4 jeweils über ein zur betreffenden Phase gehöriges Tonfrequenzpegel-Messgerät 5 auf den Istwert-Eingang 6 des zur betreffenden Phase gehörigen Reglers 8 geführt, dessen Ausgang mit dem pro Phase vorhandenen, zur betreffendenPhase gehörigen Steuereingang 9 des Rundsteuersenders 1 verbunden ist. In einer Dreiphasen-Variante der ersten Untervariante (siehe Fig. 1) werden in diesem Fall drei Ausgangsströme $i_{1,R}$, $i_{1,S}$ und $i_{1,T}$ des Rundsteuersenders 1 mittels der Stromsensoren 4 ermittelt, die in der Regel, was ein weiterer Vorteil der erfindungsgemässen Anordnung ist, sowieso im Rundsteuersender 1 vorhanden sind, wo sie zur Realisierung einer Überstromüberwachung verwendet werden zwecks Begrenzung der Werte der Ausgangsströme $i_{1,R}$, $i_{1,S}$ und $i_{1,T}$. Abtastwerte der letzteren werden anschliessend in den nachgeschalteten Tonfrequenzpegel-Messgeräten 5 ausgewertet zwecks Ermittlung der Istwerte $IW_R$, $IW_S$ und $IW_T$ der drei Phasen R, S und T. Diese Istwerte werden dann in den drei Reglern 8 mit dem für alle Phasen gemeinsamen Sollwert SW verglichen, der am Sollwert-Eingang 7 aller drei Regler 8 ansteht. Der Sollwert SW wird z. B. in einem für alle Phasen gemeinsamen Sollwertgeber 15 erzeugt, dessen Ausgang mit den Sollwert-Eingängen 7 der drei Regler 8 verbunden ist. Das Sollwert/Istwert-Subtraktionsglied 8a eines jeden der drei Regler 8 bildet dann die Differenz zwischen dem Sollwert SW und dem Istwert $IW_R$ bzw. $IW_S$ bzw. $IW_T$. Die Abtastungen zum Erhalt der Abtastwerte erfogt vorzugsweise periodisch, z. B. alle 500 µs, d. h. einmal während der Dauer eines jeden Rundsteuerimpulses.

Bei asymmetrischen Energieversorgungsnetzen 3 ist immer die erste Untervariante der ersten Variante zu verwenden. Bei symmetrischen Energieversorgungsnetze 3 kann dagegen eine zweite Untervariante der ersten Variante oder die zweite Variante verwendet werden.

Die zweite Untervariante der ersten Variante ist ähnlich wie deren erste Untervariante mit dem Unterschied, dass zwei Stromsensoren 4, zwei Tonfrequenzpegel-Messgeräte 5 und zwei Regler 8 eingespart werden und nur der Ausgangsstrom einer einzigen Phase des Rundsteuersenders 1 geregelt wird, z. B. derjenige der Phase R. Daher sind in der Fig. 1 die Stromsensoren 4, die Tonfrequenzpegel-Messgeräte 5 und die Regler 8 der beiden Phasen S und T gestrichelt dargestellt, da nur fakultativ, nämlich in der ersten Untervariante vorhanden. In einer mehrphasigen Anordnung der zweiten Untervariante ist der Ausgang des einzig vorhandenen Reglers 8, also z. B. derjenige der Phase R, mit allen Steuereingängen 9 des Rundsteuersenders 1 verbunden, was in der Fig. 1 aus Klarheitsgründen nicht dargestellt ist (siehe jedoch Fig. 2), wobei der Rundsteuersender 1, wie bereits erwähnt, je einen Steuereingang 9 pro Phase besitzt.

In der zweiten Variante (siehe Fig. 2) ist bei der mehrphasigen Anordnung je ein Stromsensor 4 pro Phase vorhanden und die Ausgänge der Stromsensoren 4 sind mitje einem zugehörigen Eingang eines für alle Phasen gemeinsamen Tonfrequenzpegel-Messgerätes 5 verbunden, dessen Ausgang auf den Istwert-Eingang 6 eines für alle Phasen gemeinsamen Reglers 8 geführt ist. Der Ausgang des letzteren ist dann mit allen Steuereingängen 9 des Rundsteuersenders 1 verbunden, wobei der letztere wieder je einen Steuereingang 9 pro Phase besitzt.

Die zweite Variante und die zweite Untervariante der ersten Variante sind zwar gerätemässig weniger aufwendig als die erste Untervariante der ersten Variante, jedoch sind sie nur bei symmetrrischen Netzlasten sinnvoll verwendbar.

Das Tonfrequenzpegel-Messgerät 5 enthält jeweils einen Schätzwertermittler 5a oder 5b, dem ein Tiefpassfilter 5c nachgeschaltet ist.

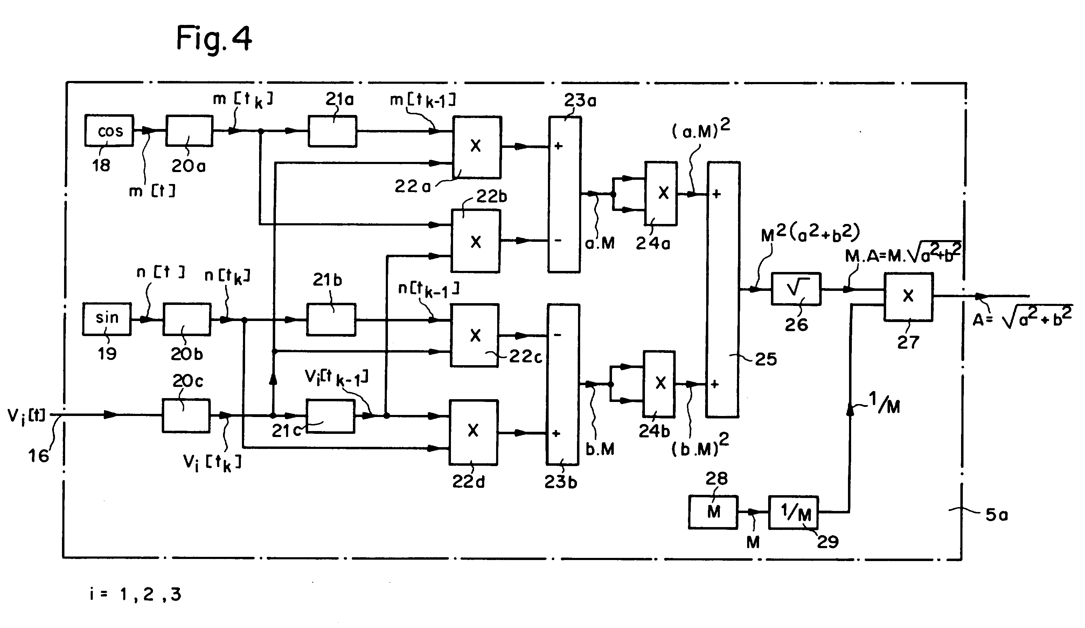

Der in der ersten Variante im Tonfrequenzpegel-Messgerät 5 vorzugsweise vorhandene Schätzwertermittler 5a verwendet bevorzugt die Methode der kleinsten Quadrate ("Least Square"-Algorithmen). In der ersten Variante ist der Ausgang eines jeden Stromsensors 4 mit einem Eingang 16 des Tonfrequenzpegel-Messgerätes 5 verbunden, welcher Eingang gleichzeitig ein Eingang 16 des Schätzwertermittlers 5a ist. Am Eingang 16 steht jeweils eine Eingangsspannung $v_i[t]$ an, die proportional dem Ausgangsstrom $i_{1,R}$ bzw. $i_{1,S}$ bzw. $i_{1,T}$ des Rundsteuersenders 1 ist, wobei t die Zeit bezeichnet und i = 1, 2 oder 3 je nach Phase ist. Gemäss Fig. 4 enthält der Schätzwertermittler 5a unter anderem einen Kosinus-Funktionsgenerator 18 und einen Sinus-Funktionsgenerator 19, die ein Kosinus- bzw. Sinus-Signal $m[t]$ bzw. $n[t]$ der gleichen Kreisfrequenz $\omega_2 = 2\pi f_2$, der gleichen Amplitude und der gleichen Phase erzeugen, wobei aus Gründen der mathematischen Einfachheit nachfolgend jeweils ihre Amplitude gleich Eins und ihre Phase gleich Null angenommen wird. Die Frequenz des Kosinus- und des Sinus-Signals sowie der Eingangsspannung $v_i[t]$ ist jeweils

die vorbekannte Rundsteuer-Tonfrequenz $f_2$ der betreffenden Rundsteueranlage. Die Eingangsspannung $v_i[t]$ besitzt neben ihrer vorbekannten Frequenz $f_2$ je eine unbekannte Amplitude A und Phase $\varphi$, wobei der Wert der ersteren durch den Schätzwertermittler 5a zu ermitteln ist. Es gelten folgende Gleichungen:

$$m[t] = \cos \omega_2 t$$

$$n[t] = \sin \omega_2 t$$

$$v_i[t] = A \cdot \sin [\omega_2 t + \varphi] = A \cdot \cos \varphi \cdot \sin \omega_2 t + A \cdot \sin \varphi \cdot \cos \omega_2 t$$

$$= a \cdot \sin \omega_2 t + b \cdot \cos \omega_2 t \tag{I}$$

mit:

$$a = A \cdot \cos \varphi$$

$$b = A \cdot \sin \varphi$$

$$A = \sqrt{a^2 + b^2}$$

Gesucht wird die unbekannte Amplitude A der Eingangsspannung $v_i[t]$, welche Amplitude mittels der letzten Gleichung ermittelbar ist.

Den beiden Funktionsgeneratoren 18 und 19 sowie dem Eingang 16 ist jeweils eine zugehörige Reihenschaltung 20a;21a bzw. 20b;21b bzw. 20c;21c einer Abtastschaltung 20a bzw. 20b bzw. 20c und eines nachgeschalteten Verzögerungsgliedes 21a bzw. 21b bzw. 21c nachgeschaltet einerseits zur jeweiligen periodischen Abtastung in den Abtastschaltungen 20c, 20a und 20b der Eingangsspannung $v_i[t]$ bzw. eines Ausgangssignals eines der beiden Funktionsgeneratoren 18 oder 19 und anderseits zur jeweiligen anschliessenden Verzögerung im zugehörigen Verzögerungsglied 21c bzw. 21a bzw. 21b der so erhaltenen Abtastwerte um eine Periode T der periodischen Abtastungen. Unter der Annahme, dass k = 1, 2, 3, ... eine ganzzahlige laufende Nummer der Abtastungen und tk ein zu k gehörender Abtastzeitpunkt bezeichnet, sind zum Zeitpunkt $t_k = kT$ unter Berücksichtigung der Gleichung (I) die Ausgangssignale der Abtastschaltungen 20c, 20a und 20b gleich

$$v_i[t_k] = a \cdot \sin [\omega_2 \cdot t_k] + b \cdot \cos [\omega_2 \cdot t_k] = a \cdot \sin [kT\omega_2] + b \cdot \cos [kT\omega_2]$$

$$= a \cdot \sin \Psi_2 + b \cdot \cos \Psi_2 \tag{II}$$

$$m[t_k] = \cos [\omega_2 \cdot t_k] = \cos [kT\omega_2] = \cos \Psi_2 \tag{IIa}$$

$$n[t_k] = \sin [\omega_2 \cdot t_k] = \sin [kT\omega_2] = \sin \Psi_2 \tag{IIb}$$

mit $\Psi_2 = kT\omega_2$, und diejenigen der Verzögerungsglieder 21c, 21a und 21b gleich

$$v_i[t_{k-1}] = a \cdot \sin [\omega_2 \cdot t_{k-1}] + b \cdot \cos [\omega_2 \cdot t_{k-1}] = a \cdot \sin \{[k-1]T\omega_2\} + b \cdot \cos \{[k-1]T\omega_2\}$$

$$= a \cdot \sin \Psi_1 + b \cdot \cos \Psi_1 \tag{III}$$

$$m[t_{k-1}] = \cos\,[\omega_2 \cdot t_{k-1}] = \cos\,\{[k-1]T\omega_2\} = \cos\,\Psi_1 \qquad\qquad\text{(IIIa)}$$

$$n[t_{k-1}] = \sin\,[\omega_2 \cdot t_{k-1}] = \sin\,\{[k-1]T\omega_2\} = \sin\,\Psi_1 \qquad\qquad\text{(IIIb)}$$

mit $\Psi_1 = [k-1]T\omega_2$.

Die Gleichungen (II) und (III) stellen zwei Gleichungen mit zwei Unbekannten a und b dar. Nach einer Multiplikation der Gleichung (III) mit $\sin\,\Psi_2$ und der Gleichung (II) mit $\sin\,\Psi_1$ ergibt sich durch Subtraktion:

$$v_i[t_{k-1}]\cdot\sin\,\Psi_2 - v_i[t_k]\cdot\sin\,\Psi_1 = b\cdot\cos\,\Psi_1\cdot\sin\,\Psi_2 - b\cdot\cos\,\Psi_2\cdot\sin\,\Psi_1$$

$$= b\cdot\sin\,[\Psi_2 - \Psi_1]$$

$$= b\cdot\sin\,\{kT\omega_2 - [k-1]T\omega_2\} = b\cdot\sin\,[T\omega_2]$$

Durch Auflösung nach b ergibt sich unter Berücksichtigung der Gleichungen (IIb) und (IIIb):

$$b = \{v_i[t_{k-1}]\cdot\sin\,\Psi_2 - v_i[t_k]\cdot\sin\,\Psi_1\}/\sin[T\omega_2]$$

$$= \{v_i[t_{k-1}]\cdot\sin\,\Psi_2 - v_i[t_k]\cdot\sin\,\Psi_1\}/M$$

$$= \{v_i[t_{k-1}]\cdot n[t_k] - v_i[t_k]\cdot n[t_{k-1}]\}/M$$

Desgleichen ergibt sich nach einer Multiplikation der Gleichung (III) mit $\cos\Psi_2$ und der Gleichung (II) mit $\cos\Psi_1$ durch Subtraktion:

$$v_i[t_{k-1}]\cdot\cos\,\Psi_2 - v_i[t_k]\cdot\cos\,\Psi_1 = a\cdot\cos\,\Psi_2\cdot\sin\,\Psi_1 - a\cdot\cos\,\Psi_1\cdot\sin\,\Psi_2$$

$$= a\cdot\sin\,[\Psi_1 - \Psi_2]$$

$$= a\cdot\sin\,\{[k-1]T\omega_2 - kT\omega_2\} = -a\cdot\sin\,[T\omega_2]$$

Durch Auflösung nach a ergibt sich unter Berücksichtigung der Gleichungen (IIa) und (IIIa):

$$a = -\{v_i[t_{k-1}]\cdot\cos\,\Psi_2 - v_i[t_k]\cdot\cos\,\Psi_1\}/\sin\,[T\omega_2]$$

$$= -\{v_i[t_{k-1}]\cdot\cos\,\Psi_2 - v_i[t_k]\cdot\cos\,\Psi_1\}/M$$

$$= -\{v_i[t_{k-1}]\cdot m[t_k] - v_i[t_k]\cdot m[t_{k-1}]\}/M$$

Dabei ist jeweils $\sin[T\omega_2] = \sin\,[2\pi f_2 \cdot T]$ eine vorbekannte Konstante M.

Die Ausgänge des Verzögerungsgliedes 21a und der Abtastschaltung 20c sind auf je einen Eingang eines ersten Multiplizier-Gliedes 22a geführt, dessen Ausgang mit einem Plus-Eingang eines ersten Subtraktions-Gliedes 23a verbunden ist, an welchem Ausgang somit das Produkt $v_i[t_k]\cdot m[t_{k-1}]$ ansteht.

Die Ausgänge des Verzögerungsgliedes 21c und der Abtastschaltung 20a sind auf je einen Eingang eines zweiten Multiplizier-Gliedes 22b geführt, dessen Ausgang mit einem Minus-Eingang des ersten Subtraktions-Gliedes 23a verbunden ist, an welchem Ausgang somit das Produkt $v_i[t_{k-1}]\cdot m[t_k]$ ansteht.

Der Ausgang des ersten Subtraktions-Gliedes 23a ist auf zwei Eingänge eines dritten Multiplizier-Gliedes 24a geführt, an dessen Ausgang somit ein Quadrat

$$\{v_i[t_k]\cdot m[t_{k-1}] - v_i[t_{k-1}]\cdot m[t_k]\}^2 = M^2 \cdot a^2$$ ansteht.

Die Ausgänge des Verzögerungsgliedes 21b und der Abtastschaltung 20c sind auf je einen Eingang eines vierten Multiplizier-Gliedes 22c geführt, dessen Ausgang mit einem Minus-Eingang eines zweiten Subtraktions-Gliedes 23b verbunden ist, an welchem Ausgang somit das Produkt $v_i[t_k] \cdot n[t_{k-1}]$ ansteht.

Die Ausgänge des Verzögerungsgliedes 21c und der Abtastschaltung 20b sind aufje einen Eingang eines fünften Multiplizier-Gliedes 22d geführt, dessen Ausgang mit einem Plus-Eingang des zweiten Subtraktions-Gliedes 23b verbunden ist, an welchem Ausgang somit das Produkt $v_i[t_{k-1}] \cdot n[t_k]$ ansteht.

Der Ausgang des zweiten Subtraktions-Gliedes 23b ist auf zwei Eingänge eines sechsten Multiplizier-Gliedes 24b geführt, an dessen Ausgang somit ein Quadrat

$\{v_i[t_{k-1}] \cdot n[t_k] - v_i[t_k] \cdot n[t_{k-1}]\}^2 = M^2 \cdot b^2$ ansteht.

Die Ausgänge der Multiplizier-Glieder 24a und 24b sind aufje einen Eingang eines Addiergliedes 25 geführt zwecks Bildung der Summe $M^2 \cdot [a^2 + b^2]$. Der Ausgang des Addiergliedes 25 ist über ein Quadratwurzel-Radizierglied 26 mit einem ersten Eingang eines siebten Multiplizier-Gliedes 27 verbunden, an welchem Eingang somit der Wert $M \cdot \sqrt{a^2 + b^2} = M \cdot A$ ansteht. Der Wert der vorbekannten Konstante M ist in einem Speicher 28 gespeichert, dessen Ausgang über einen Kehrwert-Bildner 29 mit einem zweiten Eingang des Multiplizier-Gliedes 27 verbunden ist, an welchem Eingang somit der Wert 1/M ansteht. Am Ausgang des Multiplizier-Gliedes 27, der gleichzeitig der Ausgang des Schätzwertermittlers 5a ist, wird somit der gesuchte, zum betreffenden Abtastzeitpunkt $t_k$ geltende Abtast-Schätzwert $A_k$ der Amplitude A erzeugt, nämlich $A = A_k = \sqrt{a^2 + b^2}$. Die Multiplizier-Glieder 22a, 22b, 22c, 22d, 24a, 24b und 27, die Subtraktions-Glieder 23a und 23b, das Addier-Glied 25, das Quadratwurzel-Radizierglied 26 sowie der Kehrwert-Bildner 29 bilden somit zusammen eine Rechneranordnung 22a; 22b; 22c; 22d; 24a; 24b; 27; 23a; 23b; 25; 26;29 zur Ermittlung von zu den Abtastzeitpunkten $t_k$ geltenden Abtast-Schätzwerten $A_k$ der Amplitude A der Eingangsspannung ($v_i[t]$). Statt dieser Rechneranordnung wird vorzugsweise ein Mikrocomputer mit seinen Speichern verwendet, um die Funktionen des Schätzwertermittlers 5a auszuführen. Im nachgeschalteten Tiefpassfilter 5c (siehe Fig. 1)) werden die vom Schätzwertermittler 5a ermittelten Tonfrequenz-Pegelwerte, d. h. die ermittelten Abtast-Schätzwerte $A_k$ der Amplitude A geglättet, so dass am Ausgang des Tiefpassfilters 5c und damit am Ausgang des Tonfrequenzpegel-Messgerätes 5 mit $0 < \alpha < 1$ zum Zeitpunkt $t_k$ folgender Wert $B_k$ des Istwertes $IW_R$ bzw. $IW_S$ bzw. $IW_T$ erscheint:

$$B_k = \alpha \cdot B_{k-1} + [1-\alpha] \cdot A_k,$$

wobei $B_{k-1}$ der Wert des Ausgangssignals des Tiefpassfilters 5c zum Zeitpunkt $t_{k-1}$ ist.

Der in der zweiten Variante im Tonfrequenzpegel-Messgerät 5 vorzugsweise vorhandene Schätzwertermittler 5b ermittelt aus Abtastwerten der mittels der Stromsensoren 4 gemessenen Ausgangsströme $i_{1,T}$, $i_{1,S}$ und $i_{1,R}$ der drei Phasen R, S und T des Rundsteuersenders 1 oder, genauer ausgedrückt, aus Abstatwerten $v_{i,R}[t_k]$, $v_{i,S}[t_k]$ und $v_{i,T}[t_k]$ der an drei Eingängen 16a, 16b und 16c des Schätzwertermittlers 5b anstehenden Eingangspannungen $v_{i,R}[t]$, $v_{i,S}[t]$ und $v_{i,T}[t]$ einen vektoriellen Summenwert $IW_M$, dessen Absolutwert $IIW_M I$ dem Istwert-Eingang 6 des Reglers 8 als Istwert zugeführt wird (siehe Fig. 2). Dabei sind die Eingangspannungen $v_{i,R}[t]$, $v_{i,S}[t]$ und $v_{i,T}[t]$ jeweils proportional dem Ausgangsstrom $i_{1,T}$ bzw. $i_{1,S}$ bzw. $i_{1,R}$ des Rundsteuersenders 1. In der zweiten Variante ist somit der Ausgang eines jeden Stromsensors 4 mit dem Eingang 16a bzw. 16b bzw. 16c des Tonfrequenzpegel-Messgerätes 5 verbunden, der gleichzeitig einer der drei Eingänge 16a bzw. 16b bzw. 16c des Schätzwertermittlers 5b ist.

Die Ausgangsströme $i_{1,T}$, $i_{1,S}$ und $i_{1,R}$ bzw. die Eingangsspannungen $v_{i,R}[t]$, $v_{i,S}[t]$ und $v_{i,T}[t]$ stellen drei jeweils um einen Winkel von 120° gegeneinander verdrehte Vektoren dar. Nachfolgend wird die Richtung des Vektors $v_{i,R}$ als reelle Achse gewählt. Der Realanteil Re des vektoriellen Summenwertes der drei Abtastwerte $v_{i,R}[t_k]$, $v_{i,S}[t_k]$ und $v_{i,T}[t_k]$ der Eingangsspannungen $v_{i,R}$, $v_{i,S}$ und $v_{i,T}$ ist dann

$$Re = v_{i,R}[t_k] - v_{i,S}[t_k] \cos 60° - v_{i,T}[t_k] \cos 60° = v_{i,R}[t_k] - 1/2 \cdot \{[v_{i,S}[t_k] + v_{i,T}[tk]\},$$

während der betreffende Imaginäranteil gleich

$$Im = 0 - v_{i,S}[t_k] \sin 60° + v_{i,T}[t_k] \sin 60° = -[\sqrt{3/2}] \cdot \{[v_{i,S}[t_k] - v_{i,T}[t_k]\}$$

ist.

Ein vom Schätzwertermittler 5b ermittelter Absolutwert von zwei Drittel der Amplitude ist dann

$$I I W_M I = [2/3]\sqrt{Re^2 + Im^2} = [1/3]\sqrt{\{2v_{iR}[t_k] - v_{iS}[t_k] - v_{iT}[t_k]\}^2 + 3\{v_{iS}[t_k] - v_{iT}[t_k]\}^2}$$

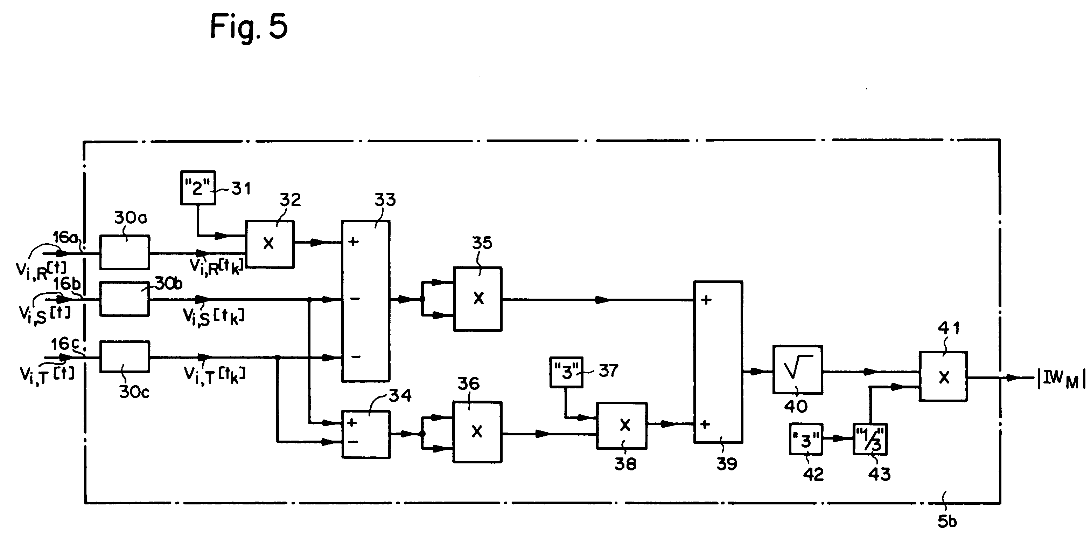

Den drei Eingängen 16a, 16b und 16c ist im Schätzwertermittler 5b jeweils eine zugehörige Abtastschaltung 30a bzw. 30b bzw. 30c nachgeschaltet (siehe Fig. 5) zur jeweiligen periodischen Abtastung der Eingangsspannungen $v_{i,R}$ [t], $v_{i,S}$[t] und $v_{i,T}$[t]) des Schätzwertermittlers 5b mit der Periode T, so dass an den Ausgängen der Abtastschaltungen 30a, 30b und 30c jeweils der Abtastwert $v_{i,R}$[$t_k$] bzw. $v_{i,S}$[$t_k$] bzw. $v_{i,T}$[$t_k$] ansteht. In einem Speicher 31 ist ein Wert Zwei gespeichert. Die Ausgänge der Abtastschaltung 30a und des Speichers 31 sind auf je einen Eingang eines Multiplizier-Gliedes 32 geführt, dessen Ausgang mit einem Plus-Eingang eines Subtraktions-Gliedes 33 verbunden ist. Der Ausgang der Abtastschaltung 30b ist auf einen ersten Minus-Eingang des Subtraktions-Gliedes 33 und auf einen Plus-Eingang eines Subtraktions-Gliedes 34 geführt. Der Ausgang der Abtastschaltung 30c ist auf einen zweiten Minus-Eingang des Subtraktions-Gliedes 33 und auf einen Minus-Eingang des Subtraktions-Gliedes 34 geführt. Am Ausgang des Subtraktions-Gliedes 33 ist der Wert

$$2v_{iR}\left[t_k\right] - v_{iS}\left[t_k\right] - v_{iT}\left[t_k\right]$$

und am Ausgang des Subtraktions-Gliedes 34 der Wert

$$v_{iS}\left[t_k\right] - v_{iT}\left[t_k\right]$$

vorhanden.

Die Ausgänge der beiden Subtraktions-Glieder 33 und 34 sind jeweils mit zwei Eingängen eines zugehörigen Multiziplier-Gliedes 35 bzw. 36 verbunden zwecks Quadratbildung des Ausgangssignals des betreffenden Subtraktions-Gliedes 33 bzw 34. In einem Speicher 37 ist ein Wert Drei gespeichert. Die Ausgänge des Multiplizier-Gliedes 36 und des Speichers 37 sind auf je einen Eingang eines Multiplizier-Gliedes 38 geführt, dessen Ausgang mit einem ersten Eingang eines Addier-Gliedes 39 verbunden ist, während der Ausgang des Multiplizier-Gliedes 35 auf einen zweiten Eingang des Addier-Gliedes 39 geführt ist. Der Ausgang des letzteren ist über ein Quadratwurzel-Radizierglied 40 mit einem ersten Eingang eines Multiplizier-Gliedes 41 verbunden, dessen Ausgang einen Ausgang des Schätzwertermittlers 5b bildet. Am Ausgang des Quadratwurzel-Radiziergliedes 40 ist der Wert

$$\sqrt{\left\{2v_{iR}\left[t_k\right] - v_{iS}\left[t_k\right] - v_{iT}\left[t_k\right]\right\}^2 + 3\left\{v_{iS}\left[t_k\right] - v_{iT}\left[t_k\right]\right\}^2}$$

vorhanden. Ein Wert Drei ist in einem Speicher 42 gespeichert, dessen Ausgang über einen Kehrwert-Bildner 43 auf einen zweiten Eingang des Multiplizier-Gliedes 41 geführt ist, so dass am Ausgang des letzteren zum Zeitpunkt $t_k$ ein Abtast-Schätzwert des Wertes IIW$_M$I ansteht. Im nachgeschalteten Tiefpassfilter 5c werden dann, ähnlich wie in der ersten Variante, die vom Schätzwertermittler 5b ermittelten, zu den Abtastzeitpunkten $t_k$ geltenden Absolutwerte der vektoriellen Summen-Abtast-Schätzwerte IW$_M$ der Eingangsspannungen $v_{i,R}$[t]), $v_{i,S}$[t] und $v_{i,T}$[t] geglättet, worauf das Sollwert/Istwert-Subtraktionsglied 8a des Reglers 8 die Differenz zwischen dem Sollwert SW, der am Sollwert-Eingang 7 des Reglers 8 ansteht, und dem geschätzten sowie gefilterten Istwert IIW$_M$I bildet (siehe Fig. 2). Da die Formel zur Berechnung von IIW$_M$I nur bei einem symmetrischen Energieversorgungsnetz gilt, ist die zweite Variante, wie bereits erwähnt, genau wie die zweite Untervariante der ersten Variante nur für symmetrische Energieversorgungsnetze verwendbar. Die Multiplizier-Glieder 32, 35, 36, 38 und 41, die Subtraktions-Glieder 33 und 34, das Addier-Glied 39, das Quadratwurzel-Radizierglied 40 sowie der Kehrwert-Bildner 43 bilden zusammen eine Rechneranordnung 32; 35; 36; 38; 41; 33; 34; 39; 40; 43 zur Ermittlung der zu den Abtastzeitpunkten $t_k$ geltenden vektoriellen Summen-Abtast-Schätzwerte IW$_M$ der Eingangsspannungen $v_{i,R}$[t]), $v_{i,S}$[t] und $v_{i,T}$[t] des Schätzwertermittlers 5b. Statt dieser Rechneranordnung wird wieder vorzugsweise ein Mikrocomputer mit seinen Speichern verwendet, um die Funktionen des Schätzwertermittlers 5b auszuführen.

Der einphasige oder mehrphasige Ausgang des Rundsteuersenders 1 ist, wie bereits erwähnt, über die Stromsensoren 4 mit der Netzankopplung 2 verbunden. Fakultativ kann jedoch zusätzlich noch in allen Varianten ein einphasiger bzw. mehrphasiger Transformator 17 (siehe Fig. 1 oder Fig. 2) der Netzankopplung 2 unmittelbar vorgeschaltet sein, so dass die Ausgänge des Rundsteuersenders 1 bzw. die Stromsensoren 4 über den Transformator 17 an der Netzankopplung 2 angeschlossen sind. Der Transformator 17 ist funktional gesehen ein Ausgangs-Transformator des Rundsteuersenders 1. In der Dreiphasen-Ausführung sind z. B. seine drei Primärwicklungen und seine drei Sekundärwicklungen jeweils sternförmig geschaltet, wobei der Sternpunkt der drei niederspannungsseitigen, mit den Ausgängen des Rundsteuersenders 1 bzw. den Stromsensoren 4 verbundenen Primärwicklungen am Bezugspotential des Rundsteuersenders 1 liegt, während der Sternpunkt der hochspannungsseitigen, mit der Netzankopplung 2 verbundenen Sekundärwicklungen z. B. an Erde liegt. Jede Sekundärwicklung des Transformators 17 besitzt zum Zweck einer Pegeleinstellung vorzugsweise mehrere Anzapfungen. Je nach Ankopplungstyp, Rundsteuerfrequenz, Tonfrequenzpegel und auszusteuerndem Energieversorgungsnetz 3 stimmt nämlich die maximale Ausgangsspannung des Rundsteuersenders 1 oft nicht mit der gewünschten optimalen maximalen Eingangsspannung der Netzankopplung 2 überein. Die Anpassung erfolgt dann mittels des Transformators 17 und seinen Anzapfungen. Der letztere ergibt zusätzlich eine galvanische Trennung, die es gestattet, gewisse Sicherheitsanforderungen sauber zu lösen. Eingesetzt wird der Transformator 17 vorzugsweise am Ausgang des Rundsteuersenders 1, da er dort wegen der höheren Frequenzen der tonfrequenten Rundsteuersignale kleinere Abmessungen besitzt als ein entsprechender am Eingang des Rundsteuersenders 1 angeordneter 50Hz-Transformator. Wird der Transformator 17 zu Beginn eines Rundsteuerimpulses mit der vollen Spannung beaufschlagt, treten Kurzschluss-Ströme infolge der Eisensättigung des Kerns des Transformators 17 auf. Dabei ist dieses Verhalten unterschiedlich je nach vorhandener Remanenzlage zu Beginn des Rundsteuerimpulses. Auch hier hilft die erfindungsgemässe Regelung der Ausgangsströme des Rundsteuersenders 1, wenn die Ausgangsspannung des oder der Regler 8 zu Beginn eines jeden Rundsteuerimpulses zukzessiv erhöht wird, z.B. mittels einer rampenförmig ansteigenden variablen Vorgabe des Sollwertes SW oder eines rampenförmig ansteigenden Wertes eines oder mehrerer der für den Regler 8 charakteristischen Parameter-Merkmale.

Da am Ausgang des Rundsteuersenders 1 dem Rundsteuer-Tonfrequenzsignal keine 50 Hz-Signale sowie keine 50Hz-Oberwellen überlagert sind bzw. da diese dort nur schwach vorhanden sind, wird zwecks deren Herausfilterung in der Regel kein Bandpassfilter benötigt. Im Regelkreis entfallen somit die Einschwingzeiten aller Bandpassfilter, da einerseits die Bandpassfilter der Netzankopplung 2 nicht Teil des Regelkreises 1;4;5;8 sind und andererseits das Bandpassfilter zur Trennung des Rundsteuer-Tonfrequenzsignals von den 50Hz-Signalen bzw. deren Oberwellen nicht mehr vorhanden ist.

Die bei einer Netz-Vollast benötigten Ausgangsströme $i_1$ des Rundsteuersenders 1, um einen bestimmten Sendepegel im Energieversorgungsnetz 3 zu erreichen, erzeugt immer, auch bei einer Netz-Schwachlast, einen genügend grossen Sendepegel. Zudem bleiben Ausgangsströme $i_2$ der Netzankopplung 2 konstant, wenn Ausgangsströme $i_1$ des Rundsteuersenders 1 auf einen konstanten Wert geregelt werden. Die Grösse der Ausgangsströme $i_1$ bestimmt ausserdem die Baugrösse der teuren Hochspannungselemente der Rundsteuer-Sendeanlage sowie den maximalen Stromwert der Starkstrom-Halbleiterbauelemente des Rundsteuersenders 1, was beides wiederum den Preis der Rundsteuer-Sendeanlage bestimmt, welcher somit mittels der Regelung der Ausgangsströme $i_1$ des Rundsteuersenders 1 auf ein optimales Minimum niedrig gehalten werden kann. Ausserdem lassen sich mit der Regelung der Ausgangsströme $i_1$ deren transiente Werte auf die stationären Werte begrenzen und ermöglichen somit eine optimale Ausnutzung des Rundsteuersenders 1. Ein durch diese Regelung gegenüber dem ungeregelten Betrieb verursachter langsamerer Anstieg der Tonfrequenz-Spannungen $u_2$ in der Hochspannungs- bzw. Mittelspannungs-Ebene des Energieversorgungsnetzes 3 kann zu Beginn eines jeden Rundsteuerimpulses durch eine variable, z. B. rampenförmige Sollwertvorgabe verbessert werden.

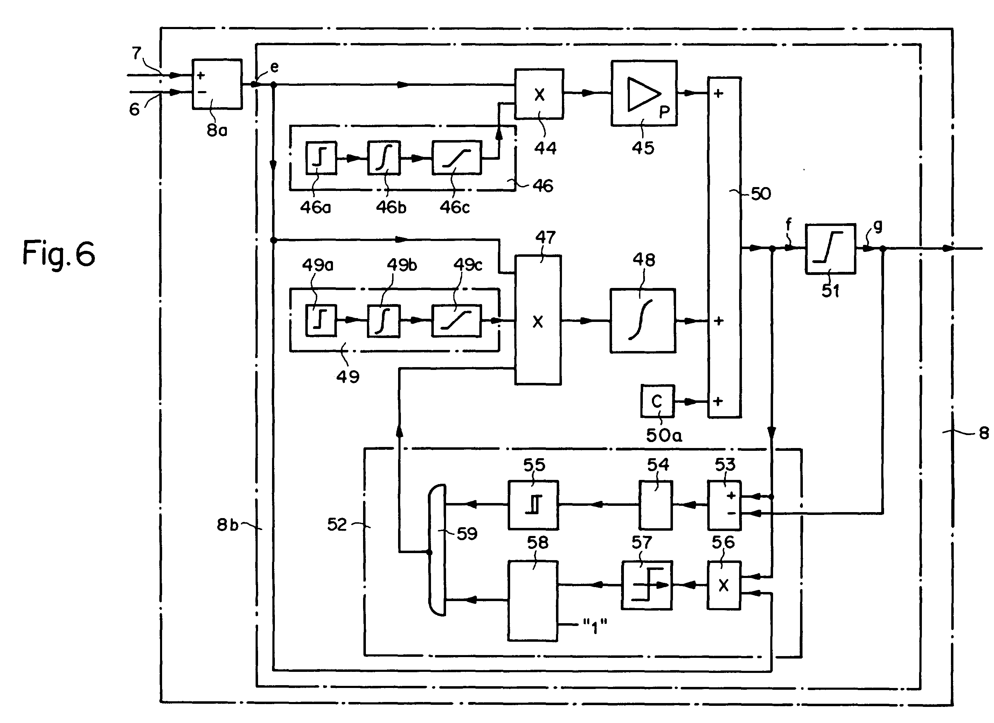

Der Regler 8 ist vorzugsweise ein PI-Regler, d. h. er besitzt ein Proportional- und ein Integral-Teil. Der Regelverstärker 8b ist in diesem Fall ein PI-Regelverstärker. Der PI-Regelverstärker 8b eines in der Fig. 6 dargestellten PI-Reglers 8 besitzt dann ein Proportional-Teil 44;45;46 und ein Integral-Teil 47;48;49. Das letztere enthält ein fakultativ vorhandenes Multiplizier-Glied 47, einen Integrator 48 und einen fakultativ vorhandenen Rampen-Generator 49, während das erstere ein fakultativ vorhandenes Multiplizier-Glied 44, einen Verstärker 45 und einen fakultativ vorhandenen Rampen-Generator 46 enthält. Die beiden Rampen-Generatoren 46 und 49 sind gleich aufgebaut und enthalten jeweils einen Sprungfunktions-Generator 46a bzw. 49a, einen Integrator 46b bzw. 49b und einen Begrenzer 46c bzw. 49c, die in der angegebenen Reihenfolge in Reihe geschaltet sind. Die im Sprungfunktions-Generator 46a bzw. 49a erzeugte Sprungfunktion wird mittels des Integrators 46b bzw. 49b in eine linear ansteigende Rampe umgewandelt, deren Wert mittels des Begrenzers 46c bzw. 49c nach oben und nach unten hin begrenzt wird. Mittels der Rampen-Generatoren 46 und 49 ist es jeweils möglich, dass sich der Einfluss des Proportional-Teils 44;45;46 bzw. des Integral-Teils 47;48; 49 nicht in sprunghaften, sondern in langsam ansteigenden Änderungen einer Stellgrösse f (siehe Fig. 6) bemerkbar macht. In diesem Fall steigen die Parameterwerte des Reglers 8 langsam rampenförmig an, sobald die betreffende Sprungfunktion ausgelöst wird. Zu diesem Zweck ist ein Ausgang des Sollwert/Istwert-Subtraktionsgliedes 8a im Regler 8 jeweils auf einen ersten Eingang und ein Ausgang des Rampen-Generators 46 bzw. 49 auf einen zweiten Eingang des Multiplizier-Gliedes 44 bzw. 47 geführt, dessen Ausgangssignal im Verstärker 45 um den Proportionalitätsfaktor P verstärkt bzw. im Integrator 48 integriert wird. Eine Konstante C ist in einem Speicher 50a gespeichert. Die Ausgänge des Verstärkers 45, des Integrators 48 und des Speichers 50a sind je auf einen getrennten Eingang eines Addiergliedes 50 geführt. Das Addier-Glied 50 ist somit zur Summenbildung der Konstante C und je eines Ausgangssignals des Proportional-Teils 44;45;46 und des Integral-Teils 47;48;49 vorhanden. Der Proportional-Anteil und der Integral-Anteil des Regelsignals sowie die Konstante C werden so addiert und ihre Summe bildet ein PI-Regelsignal, dessen Wert in einem, dem Addier-Glied 50 nachgeschalteten Begrenzer 51 nach oben und nach unten hin begrenzt wird. Der Ausgang des Addierers 50 ist über den Begrenzer 51 auf einen Ausgang des Regelverstärkers 8b und damit des Reglers 8 geführt. Die beiden letzteren sind fakultativ mit einer sogenannten "Anti-Windup"-Schaltung 52 versehen, welche ein weiteres Integrieren des Integrations-Anteils des Regelsignals verhindert, wenn der Begrenzer 51 in seinem Sättigungsbereich arbeitet. In diesem Fall ist ein Ausgangssignal g des Begrenzers 51 unterschiedlich vorn Eingangssignal des letzteren, nämlich der Stellgrösse f. Im Linear-Bereich des Begrenzers 51 sind dagegen diese beiden Signale gleich. Die "Anti-Windup"-Schaltung 52, falls vorhanden, enthält vorzugsweise ein Subtraktions-Glied 53, einen Absolutwert-Bildner 54, einen mit einer Hysterese versehenen Schwellwert-Schalter 55, ein Multiplizier-Glied 56, einen Vorzeichen-Erkenner 57, einen Bipolar/Unipolar-Wandler 58 und ein Gatter 59. Das letztere ist, was nachfolgend und in der Fig. 6 angenommen wird, z. B. ein Nand-Gatter. Bei einer Verwendung negativer Logik kann es jedoch auch ein Oder-Gatter sein. Der Ausgang des Begrenzers 51 ist mit einem ersten Eingang der "Anti-Windup"-Schaltung 52 verbunden, der durch den Minus-Eingang des Subtraktions-Gliedes 53 gebildet ist. Ein Ausgang des letzteren ist über den Absolutwert-Bildner 54 mit einem Eingang des Schwellwert-Schalters 55 verbunden, dessen Ausgang seinerseits auf einen ersten Eingang des Nand-Gatters 59 geführt ist. Der Eingang des Begrenzers 51 ist mit einem zweiten Eingang der "Anti-Windup"-Schaltung 52 verbunden, der durch einen mit einem Plus-Eingang des Subtraktions-Gliedes 53 verbundenen ersten Eingang des Multiplizier-Gliedes 56 gebildet ist. Ein Ausgang des letzteren ist über den Vorzeichen-Erkenner 57 mit einem Eingang des Bipolar/Unipolar-Wandlers 58 verbunden, dessen Ausgang seinerseits auf einen zweiten Eingang des Nand-Gatters 59 geführt ist. An einem weiteren Eingang des Bipolar/Unipolar-Wandlers 58 steht ein Logikwert Eins an. Der Ausgang des Sollwert/Istwert-Subtraktionsgliedes 8a ist mit einem dritten Eingang der "Anti-Windup"-Schaltung 52 verbunden, der durch einen zweiten Eingang des Multiplizier-Gliedes 56 gebildet ist. Der Ausgang des Nand-Gatters 59 bildet einen Ausgang der "Anti-Windup"-Schaltung 52 und ist auf einen dritten Eingang des Multiplizier-Gliedes 47 geführt. Wenn die Signale f und g unterschiedlich sind, d. h. wenn der Begrenzer 51 im Sättigungs-Bereich arbeitet, ist die Differenz [f-g] am Ausgang des Subtraktionsgliedes 53 und deren Absolutwert If-gl am Ausgang des Absolutwert-Bildners 54 unterschiedlich von Null, was am Ausgang des Schwellwert-Schalters 55 ein Logikwert Eins erzeugt, der am Ausgang des Nand-Gatters 59 einen Logikwert Null zur Folge hat, da am zweiten Eingang des Nand-Gatters normalerweise ein Logikwert Eins ansteht. Die Eingangssignale des Multiplizier-Gliedes 47 werden somit mit Null multipliziert, was einen Integrations-Anteil Null des Regelsignals ergibt. Die Integrierung ist somit unterdrückt, wenn der Begrenzer 51 in seinem Sättigungs-Bereich arbeitet. Dies hat jedoch zur Folge, dass grosse Initialwerte für den Integrator 48 grosse Überschwingungen verursachen, da die Integrationen bis zur Entsättigung des Begrenzers 51 unterdrückt sind. Um diese Überschwingungen zu vermeiden, wird das Signal am Ausgang des Sollwert/Istwert-Subtraktionsglied 8a, welches gleich der Sollwert/Istwert-Differenz e ist, mittels des Multiplizieres 56 überwacht, der das Produkt e.f bildet. Wenn dieses Produkt positiv ist, d. h. wenn beide Signale e und f ein gleiches Vorzeichen besitzen, was normalerweise der Fall ist, erscheint am Ausgang des Vorzeichen-Erkenners 57 ein Wert Eins, der im Bipolar/Unipolar-Wandler 58 in ein Logikwert Eins umgewandelt wird, der das Nand-Gatter 59 freigibt, so dass, wie bereits beschrieben, die Sättigung des Begrenzers 51 eine Sperrung des Integrationsteils 47;48;49 veranlasst. Ist dagegen das Produkt e.f negativ, d. h. besitzen beide Signal e und f unterschiedliche Vorzeichen, dann erscheint am Ausgang des Vorzeichen-Erkenners 57 ein Wert Minus Eins, der im Bipolar/Unipolar-Wandler 58 in einen Logikwert Null umgewandelt wird, der am Ausgang des Nand-Gatters 59 ein Logikwert Eins erzeugt, der verhindert, dass die Sättigung des Begrenzers 51 weiterhin eine Sperrung des Integrationsteils 47;48;49 veranlasst. Das Integral-Teil 47;48;49 ist somit wieder im Betrieb und verringert die Überschwingungen. Mit anderen Worten: Der Regler 8 stoppt das Integrieren nur, wenn der Begrenzer 51 im Sättigungs-Bereich arbeitet und gleichzeitig die Sollwert/Istwert-Differenz e das gleiche Vorzeichen besitzt wie das Eingangssignal f des Begrenzers 51.

Statt der Multiplizier-Glieder 44, 47 und 56, des Subtraktions-Gliedes 53, des Addier-Gliedes 50, der Integratoren 46b, 49b und 48, des Speichers 50a, der Begrenzer 46c, 49c und 51, des Verstärkers 45, des Absolutwert-Bildners 54, des Schwellwertschalters 55, des Vorzeichen-Erkenners 57, des Bipolar/Unipolar-Wandlers 58 sowie des Nand-Gatters 59 wird wieder vorzugsweise ein Mikrocomputer mit seinen Speichern verwendet, um die angegebenen Funktionen auszuführen.

Die Rechneranordnungen 22a; 22b; 22c; 22d; 24a; 24b; 27; 23a; 23b; 25; 26;29 und 32; 35; 36; 38; 41; 33; 34; 39; 40; 43 sowie die "Anti-Windup"-Schaltung 52 sind somit vorzugsweise mittels eines Mikrocomputers realisiert, wobei bevorzugt ein einziger gemeinsamer Mikrocomputer verwendet wird.

**Patentansprüche**

1. Anordnung mit einem Rundsteuersender (1) und einer dem Rundsteuersender (1) nachgeschalteten Netzankopplung (2) zur Ankopplung des Rundsteuersenders (1) an ein elektrisches Energieversorgungsnetz (3), dadurch gekennzeichnet, dass ein Ausgang eines eingangsseitig an einem Ausgang des Rundsteuersenders (1) angeschlossenen Stromsensors (4) über ein Tonfrequenzpegel-Messgerät (5) auf einen Istwert-Eingang (6) eines mit einem Sollwert-Eingang (7) versehenen Reglers (8) geführt ist, der Regler (8) ein Sollwert/Istwert-Subtraktionsglied (8a) enthält und ein Ausgang des Reglers (8) mit einem Steuereingang (9) des Rundsteuersenders (1) verbunden ist, mit dessen Hilfe ein Ausgangsstrom des Rundsteuersenders (1) einstellbar ist.

2. Anordnung nach Anspruch 1, dadurch gekennzeichnet, dass bei einer mehrphasigen Anordnung der Ausgang des Reglers (8) mit allen Steuereingängen (9) des Rundsteuersenders (1) verbunden ist, wobei der letztere je einen Steuereingang 9 pro Phase besitzt.

3. Anordnung nach Anspruch 1, dadurch gekennzeichnet, dass bei einer mehrphasigen Anordnung je ein Stromsensor (4), je ein Tonfrequenzpegel-Messgerät (5) und je ein Regler (8) pro Phase vorhanden sind, dass die Ausgänge der Stromsensoren (4) jeweils über ein zur betreffenden Phase gehöriges Tonfrequenzpegel-Messgerät (5) auf den Istwert-Eingang (6) des zur betreffenden Phase gehörigen Reglers (8) geführt sind, dessen Ausgang mit einem pro Phase vorhandenen, zur betreffenden Phase gehörigen Steuereingang (9) des Rundsteuersenders (1) verbunden ist.

4. Anordnung nach Anspruch 1, dadurch gekennzeichnet, dass bei einer mehrphasigen Anordnung je ein Stromsensor (4) pro Phase vorhanden ist, dass die Ausgänge der Stromsensoren (4) mit je einem zugehörigen Eingang eines für alle Phasen gemeinsamen Tonfrequenzpegel-Messgerätes (5) verbunden sind, dessen Ausgang auf den Istwert-Eingang (6) eines für alle Phasen gemeinsamen Reglers (8) geführt ist, und dass der Ausgang des letzteren mit allen Steuereingängen (9) des Rundsteuersenders (1) verbunden ist, wobei der letztere je einen Steuereingang (9) pro Phase besitzt.

5. Anordnung nach einem der Ansprüche 1 bis 4, dadurch gekennzeichnet, dass das Tonfrequenzpegel-Messgerät (5) jeweils einen Schätzwertermittler (5a, 5b) enthält, dem ein Tiefpassfilter (5c) nachgeschaltet ist.

6. Anordnung nach Anspruch 5, dadurch gekennzeichnet, dass der Schätzwertermittler (5a) einen Kosinus-Funktionsgenerator (18) und einen Sinus-Funktionsgenerator (19) enthält zur Erzeugung eines Kosinus- bzw. Sinus-Signals ($m[t]$, $n[t]$) der gleichen Kreisfrequenz ($\omega_2$), der gleichen Amplitude (Eins) und der gleichen Phase (Null), wobei die Frequenz des Kosinus- und des Sinus-Signals sowie einer an einem Eingang (16) des Schätzwertermittlers (5a) anstehenden Eingangsspannung ($v_i[t]$) jeweils eine vorbekannte Rundsteuer-Tonfrequenz ($f_2$) ist, dass den beiden Funktionsgeneratoren (18, 19) und dem Eingang (16) des Schätzwertermittlers (5a) jeweils eine zugehörige Reihenschaltung (20a;21a bzw. 20b;21b bzw. 20c;21c) einer Abtastschaltung (20c, 20a, 20b) und eines Verzögerungsgliedes (21c, 21a, 21b) nachgeschaltet ist, einerseits zur jeweiligen periodischen Abtastung der Eingangsspannung ($v_i[t]$) beziehungsweise eines Ausgangssignals eines der beiden Funktionsgeneratoren (18, 19) und anderseits zur jeweiligen anschliessenden Verzögerung der so erhaltenen Abtastwerte ($v_i[t_k]$, $m[t_k]$, $n[t_k]$) um eine Periode (T) der periodischen Abtastungen, und dass eine Rechneranordnung (22a; 22b; 22c; 22d; 24a; 24b; 27; 23a; 23b; 25; 26;29) vorhanden ist zur Ermittlung von zu Abtastzeitpunkten ($t_k$) geltenden Abtast-Schätzwerten ($A_k$) einer Amplitude (A) der Eingangsspannung ($v_i[t]$).

7. Anordnung nach Anspruch 5, dadurch gekennzeichnet, dass im Schätzwertermittler (5b) dessen Eingänge (16a, 16b, 16c) jeweils eine zugehörige Abtastschaltung (30a, 30b, 30c) nachgeschaltet ist zur jeweiligen periodischen Abtastung von Eingangsspannungen ($v_{i,R}[t]$, $v_{i,S}[t]$, $v_{i,T}[t]$) des Schätzwertermittlers (5b) und dass eine Rechneranordnung (32; 35; 36; 38; 41; 33; 34; 39; 40; 43) vorhanden ist zur Ermittlung von zu Abtastzeitpunkten ($t_k$) geltenden vektoriellen Summen-Abtast-Schätzwerten ($IW_M$) von Eingangsspannungen ($v_{i,R}[t]$), $v_{i,S}[t]$, $v_{i,T}[t]$) des Schätzwertermittlers (5b).

8. Anordnung nach einem der Ansprüche 1 bis 7, dadurch gekennzeichnet, dass im Regler (8) dem Sollwert/Istwert-Subtraktionsglied (8a) ein PI-Regelverstärker (8b) nachgeschaltet ist, der ein Proportional-Teil (44;45;46) und ein Integral-Teil (47;48;49) besitzt, welches letzteres ein fakultativ vorhandenes Multiplizier-Glied 47, einen Integrator 48 und einen fakultativ vorhandenen Rampen-Generator 49 enthält, während das erstere ein fakultativ vorhandenes Multiplizier-Glied 44, einen Verstärker 45 und einen fakultativ vorhandenen Rampen-Generator 46 enthält, dass zur Summenbildung einer Konstante (C) und je eines Ausgangssignals des Proportional-Teils (44;45;46) und des Integral-Teils (47;48;49) ein Addier-Glied (50) vorhanden ist, dessen Ausgang über einen Begrenzer (51) auf einen Ausgang des Reglers (8) geführt ist.

9. Anordnung nach Anspruch 8, dadurch gekennzeichnet, dass der PI-Regelverstärker (8b) mit einer "Anti-Windup"-Schaltung (52) versehen ist, welche ein weiteres Integrieren eines Integrations-Anteils eines Regelsignals verhindert, wenn der Begrenzer (51) in seinem Sättigungsbereich arbeitet und eine Sollwert/Istwert-Differenz (e) am Ausgang des Sollwert/Istwert-Subtraktionsglied (8a) das gleiche Vorzeichen besitzt wie ein Eingangssignal (f) des Begrenzers (51).

10. Anordnung nach Anspruch 9, dadurch gekennzeichnet, dass die "Anti-Windup"-Schaltung (52) ein Subtraktions-Glied (53), einen Absolutwert-Bildner (54), einen mit einer Hysterese versehenen Schwellwert-Schalter (55), ein Multiplizier-Glied (56), einen Vorzeichen-Erkenner (57), einen Bipolar/Unipolar-Wandler (58) und ein Gatter (59) enthält, dass der Ausgang des Begrenzers (51) mit einem Minus-Eingang des Subtraktions-Gliedes (53) verbunden ist, dessen Ausgang über den Absolutwert-Bildner (54) mit einem Eingang des Schwellwert-Schalters (55) verbunden ist, dessen Ausgang auf einen ersten Eingang des Gatters (59) geführt ist, dass der Eingang des Begrenzers (51) mit einem mit einem Plus-Eingang des Subtraktions-Gliedes (53) verbundenen ersten Eingang des Multiplizier-Gliedes (56) verbunden ist, dessen Ausgang über den Vorzeichen-Erkenner (57) mit einem Eingang des Bipolar/Unipolar-Wandlers (58) verbunden ist, dessen Ausgang seinerseits auf einen zweiten Eingang des Gatters (59) geführt ist, dass ein Ausgang des Sollwert/Istwert-Subtraktionsgliedes (8a) mit einem zweiten Eingang des Multiplizier-Gliedes (56) verbunden ist und dass ein Ausgang des Gatters (59) einen Ausgang der "Anti-Windup"-Schaltung (52) bildet, der auf einen Eingang des Multiplizier-Gliedes (47) des Integral-Teils (47;48; 49) geführt ist.

11. Anordnung nach einem der Ansprüche 6, 7 oder 9, dadurch gekennzeichnet, dass die Rechneranordnung (22a; 22b; 22c; 22d; 24a; 24b; 27; 23a; 23b; 25; 26;29 bzw. 32; 35; 36; 38; 41; 33; 34; 39; 40; 43) beziehungsweise die "Anti-Windup"-Schaltung (52) mittels eines Mikrocomputers realisiert sind.

## Claims

1. An arrangement having a ripple control transmitter (1) and a network coupling (2) which is connected downstream of the ripple control transmitter (1) for coupling the ripple control transmitter (1) to an electrical power supply network (3), characterised in that an output of a current sensor (4) connected at the input side to an output of the ripple control transmitter (1) is taken by way of an audio frequency level measuring device (5) to an actual value input (6) of a regulator (8) provided with a reference value input (7), the regulator (8) includes a reference value/actual value subtraction member (8a) and an output of the regulator (8) is connected to a control input (9) of the ripple control transmitter (1), by means of which an output current of the ripple control transmitter (1) can be set.

2. An arrangement according to claim 1 characterised in that in a multi-phase arrangement the output of the regulator (8) is connected to all control inputs (9) of the ripple control transmitter (1), wherein the latter has a respective control input (9) per phase.

3. An arrangement according to claim 1 characterised in that in a multi-phase arrangement there are a respective current sensor (4), a respective audio frequency level measuring device (5) and a respective regulator (8) per phase, that the outputs of the current sensors (4) are each taken by way of respective audio frequency level measuring device (5) associated with the phase in question to the actual value input (6) of the regulator (8) which is associated with the phase in question and the output of which is connected to a control input (9) per phase, associated with the phase in question, of the ripple control transmitter (1).

4. An arrangement according to claim 1 characterised in that in a multi-phase arrangement there is a respective current sensor (4) per phase, that the outputs of the current sensors (4) are connected to a respective associated input of an audio frequency level measuring device (5) which is common for all phases and whose output is taken to the actual value input (6) of a regulator (8) which is common for all phases, and that the output of the latter is connected to all control inputs (9) of the ripple control transmitter (1), wherein the latter has a respective control input (9) per phase.

5. An arrangement according to one of claims 1 to 4 characterised in that the audio frequency level measuring device (5) includes a respective estimated value-ascertaining means (5a, 5b), downstream of which is connected a low pass filter (5c).

6. An arrangement according to claim 5 characterised in that the estimated value-ascertaining means (5a) includes a cosine function generator (18) and a sine function generator (19) for producing a cosine signal and a sine signal (m[t], n[t]) respectively of the same angular frequency ($\omega_2$), the same amplitude (one) and the same phase (zero), wherein the frequency of the cosine signal and the sine signal and an input voltage ($v_i[t]$) at an input (16) of the estimated value-ascertaining means (5a) is a respective previously known ripple control audio frequency ($f_2$), that connected downstream of the two function generators (18, 19) and the input (16) of the estimated value-ascertaining means (5a) are a respectively associated series circuit (20a; 21a and 20b; 21b and 20c; 21c respectively) of a sampling circuit (20c, 20a, 20b) and a delay member (21c, 21a, 21b), on the one hand for respective periodic sampling of the input voltage ($v_i$[t]) and an output signal respectively of one of the two function generators (18, 19) and on the other hand for respective subsequent delay of the sample values ($v_i$[$t_k$], m[$t_k$], n[$t_k$]) obtained in that way by a period (T) of the periodic samplings, and that there is provided a computing arrangement (22a; 22b; 22c; 22d; 24a; 24b; 27; 23a; 23b; 25; 26; 29) for ascertaining sample estimated values ($A_k$) of an amplitude (A) of the input voltage ($v_i$[t]), said sample estimated values applying at sampling times ($t_k$).

7. An arrangement according to claim 5 characterised in that in the estimated value-ascertaining means (5b) connected downstream of its inputs (16a, 16b, 16c) is a respective associated sampling circuit (30a, 30b, 30c) for respective periodic sampling of input voltages ($v_{i,R}$[t], $v_{i,S}$[t], $v_{i,T}$[t]) of the estimated value-ascertaining means (5b) and that there is a computing arrangement (32; 35; 36; 38; 41; 33; 34; 39; 40; 43) for ascertaining vectorial sum sample estimated values ($IW_M$) of input voltages ($v_{i,R}$[t], $v_{i,S}$[t], $v_{i,T}$[t]) of the estimated value-ascertaining means (5b), said sample estimated values applying at sampling times ($t_k$).

8. An arrangement according to one of claims 1 to 7 characterised in that in the regulator (8) connected downstream of the reference value/actual value subtraction member (8a) is a PI-regulating amplifier (8b) which has a proportional portion (44; 45; 46) and an integral portion (47; 48; 49), which latter includes an optionally provided multiplying member (47), an integrator (48) and an optionally provided ramp generator (49) while the former includes an optionally provided multiplying member (44), an amplifier (45) and an optionally provided ramp generator (46), that for forming the sum of a constant (C) and a respective output signal of the proportional portion (44; 45; 46) and the integral portion (47; 48; 49) respectively there is an adding member (50) whose output is taken by way of a limiting means (51) to an output of the regulator (8).

9. An arrangement according to claim 8 characterised in that the PI-regulating amplifier (8b) is provided with an anti-windup circuit (52) which prevents further integration of an integration component of a regulating signal when the limiting means (51) operates in a saturation region and a reference value/actual value difference (e) at the output of the reference value/actual value subtraction member (8a) has the same sign as an input signal (f) of the limiting means (51).

10. An arrangement according to claim 9 characterised in that the anti-windup circuit (52) includes a subtraction member (53), an absolute value-forming means (54), a threshold value switch (55) provided with a hysteresis, a multiplying member (56), a sign recognition means (57), a bipolar/unipolar converter (58) and a gate (59), that the output of the limiting means (51) is connected to a negative input of the subtraction member (53) whose output is connected by way of the absolute value-forming means (54) to an input of the threshold value switch (55) whose output is taken to a first input of the gate (59), that the input of the limiting means (51) is connected to a first input of the multiplying member (56) which is connected to a positive input of the subtraction member (53), the output of the multiplying member (56) being connected by way of the sign recognition means (57) to an input of the bipolar/unipolar converter (58) whose output is in turn taken to a second input of the gate (59), that an output of the reference value/actual value subtraction member (8a) is connected to a second input of the multiplying member (56) and that an output of the gate (59) forms an output of the anti-windup circuit (52) which is taken to an input of the multiplying member (47) of the integral portion (47; 48; 49).

11. An arrangement according to one of claims 6, 7 and 9 characterised in that the computing arrangement (22a; 22b; 22c; 22d; 24a; 24b; 27; 23a; 23b; 25; 26; 29 and 32; 35; 36; 38; 41; 33; 34; 39; 40; 43) and the anti-windup circuit (52) respectively are embodied by means of a microcomputer.

**Revendications**

1. Dispositif incluant un émetteur (1) de télécommande centralisée et un couplage (2) de réseau monté en aval de l'émetteur (1) de télécommande centralisée pour coupler l'émetteur (1) de télécommande centralisée à un réseau d'alimentation (3) en énergie, caractérisé en ce qu'un sortie d'un capteur (4) de courant raccordé sur le côté entrée à une sortie de l'émetteur (1) de télécommande centralisée est amenée par l'intermédiaire d'un instrument de mesure (5) de niveau de fréquence acoustique à une entrée (6) de valeur effective d'un régulateur (8) pourvu d'une entrée (7) de valeur théorique, le régulateur (8) contient un soustracteur (8a) valeur théorique/valeur effective et une sortie du régulateur (8) est reliée à une entrée (9) de commande de l'émetteur (1) de télécommande centralisée, grâce à quoi un courant de sortie de l'émetteur (1) de télécommande centralisée est réglable.

2. Dispositif selon la revendication 1, caractérisé en ce que la sortie du régulateur (8) est reliée, dans le cas d'un dispositif polyphasé, à toutes les entrées (9) de commande de l'émetteur (1) de télécommande centralisée, ce dernier possédant une entrée de commande (9) pour chacune des phases.

3. Dispositif selon la revendication 1, caractérisé en ce que, dans le cas d'un dispositif polyphasé, un détecteur respectif (4) de courant, un instrument de mesure respectif (5) de niveau de fréquence acoustique et un régulateur respectif (8) sont respectivement agencés par phase, en ce que les sorties des capteurs (4) de courant sont alors amenées chacune par l'intermédiaire d'un instrument de mesure (5) de niveau de fréquence de courant associé à la phase concernée à l'entrée (6) de valeur effective du régulateur (8) associé à la phase concernée dont la sortie est reliée à une entrée de commande (9), existante pour chaque phase et associée à la phase concernée, de l'émetteur (1) de télécommande centralisée.

4. Dispositif selon la revendication 1, caractérisé en ce que, dans le cas d'un dispositif polyphasé, il existe un détecteur respectif (4) de courant par phase, en ce que les sorties des capteurs (4) de courant sont reliées chacune à une entrée associée d'un instrument de mesure (5) de niveau de fréquence acoustique commun à toutes les phases, dont la sortie est amenée à l'entrée (6) de valeur effective d'un régulateur (8) commun à toutes les phases, et en ce que la sortie de ce dernier est reliée à toutes les entrées de commande (9) de l'émetteur (1) de télécommande centralisée, ce dernier possédant une entrée de commande (9) par phase.

5. Dispositif selon l'une des revendications 1 à 4, caractérisé en ce que l'instrument de mesure (5) de niveau de fréquence acoustique contient respectivement un calculateur (5a, 5b) de valeur estimée en aval duquel est monté un filtre passe-bande (5c).

6. Dispositif selon la revendication 5, caractérisé en ce que le calculateur (5a) de valeur estimée contient un générateur (18) de fonction cosinus et un générateur (19) de fonction sinus pour engendrer un signal cosinusoïdal ou sinusoïdal ($m[t]$, $n[t]$), de la même fréquence angulaire ($w_2$), de la même amplitude (un) et de la même phase (zéro), la fréquence du signal cosinusoïdal et du signal sinusoïdal ainsi que d'une tension d'entrée ($v_i[t]$) appliquée à une entrée (16) du calculateur (5a) de valeur estimée est respectivement une fréquence acoustique ($f_2$) connue au préalable de télécommande centralisée, en ce qu'un montage en série (20a; 21a ou 20b; 21b ou 20c; 21c), formé d'un circuit détecteur (20c, 20a, 20b) et d'un élément de retard (21c, 21a, 21b) et associé à chacun des deux générateurs (18, 19) de fonctions et à l'entrée (16) du calculateur (5a) de valeur estimée, est monté en aval de ces derniers d'une part pour échantillonner respectivement de façon périodique la tension d'entrée ($v_i[t]$) ou un signal de sortie de l'un des deux générateurs (18, 19) de fonctions et d'autre part pour retarder ensuite respectivement d'une période (T) de l'échantillonnage périodique les valeurs d'échantillons ainsi obtenues ($v_i[t_k]$), $m[t_k]$, $n(t_k]$) et en ce qu'il existe un agencement d'instruments de calcul (22a; 22b; 22c; 22d; 24a; 24b; 27; 23a; 23b; 25; 26; 29) pour calculer une amplitude (A) de la tension d'entrée ($v_i[t]$) à partir de valeurs évaluées ($A_k$) d'échantillons valables à des instants ($t_k$) d'échantillonnage.

7. Dispositif selon la revendication 5, caractérisé en ce que, dans le calculateur (5b) de valeur estimée, un circuit d'échantillonnage associé (30a, 30b, 30c) est monté en aval de chacune de ses entrees (16a, 16b, 16c) pour échantillonner, respectivement de façon périodique, des tensions d'entrée ($v_{i,R}[t]$, $v_{i,S}[t]$, $v_{i,T}[t]$) du calculateur (5b) de valeur estimée et en ce qu'il est prévu un agencement d'instruments de calcul (32; 35; 36; 38; 41; 34; 39; 40; 43) pour calculer, à partir de tensions d'entrées ($v_{i,R}[t]$, $V_{i,S}[t]$, $v_{i,T}[t]$) du calculateur (5b) de valeur estimée, des valeurs estimées en forme de sommes vectorielles ($IW_M$) d'échantillonnage, valables à des instants ($t_k$) d'échantillonnage.

8. Dispositif selon l'une des revendications 1 à 7, caractérisé en ce qu'un amplificateur à régulation proportionnelle et intégrale, ou amplificateur régulé PI (8b) qui possède une partie proportionnelle (44; 45; 46) et une partie intégrale (47; 48; 49) est monté en aval du soustracteur (8a) valeur théorique/valeur effective dans le régulateur (8), la partie intégrale contenant un multiplicateur facultativement présent (47), un intégrateur (48) et un générateur (49) de rampe facultativement présent, tandis que la partie proportionnelle contient un multiplicateur (44) facultativement présent, un amplificateur (45) et un générateur (46) de rampe facultativement présent, en ce qu'un additionneur (50), dont la sortie est amenée par l'intermédiaire d'un limiteur (51) à une sortie du régulateur (8), est agencé de manière à former la somme d'une constante (C) et d'un signal de sortie de chacune des deux parties: la partie proportionnelle (44; 45; 46) et la partie intégrale (47; 48; 49).

9. Dispositif selon la revendication 8, caractérisé en ce que l'amplificateur régulé PI (8b) est pourvu d'un circuit (52) "anti-windup" ou "anti-moulinet" qui empêche une poursuite de l'intégration d'une partie d'intégration d'un signal de régulation, lorsque le limiteur (51) fonctionne dans son domaine de saturation et qu'une différence ou plusieurs différences valeur théorique/valeur effective présentes à la sortie du soustracteur (8a) valeur théorique/valeur effective possède le même signe qu'un signal d'entrée (f) du limiteur (51).

10. Dispositif selon la revendication 9, caractérisé en ce que le circuit "anti-moulinet" (52) contient un soustracteur (53), un formateur (54) de valeur absolue, un commutateur (55) de valeur de seuil pourvu d'une hystérésis, un multiplicateur (56), un détecteur (57) de signe, un convertisseur bipolaire/unipolaire (58) et une porte (59), en ce que la sortie du limiteur (51) est reliée à une entrée moins du soustracteur (53) dont la sortie est reliée par l'intermédiaire du formateur (54) de valeur absolue à une entrée du commutateur (55) de valeur de seuil, dont la sortie est amenée à une première entrée de la porte (59), en ce que l'entrée du limiteur (51) est reliée à une première entrée, reliée à une entrée plus du soustracteur (53), du multiplicateur (56) dont la sortie est reliée par l'intermédiaire du détecteur (57) de signe à une entrée du convertisseur bipolaire/unipolaire (58) dont la sortie est elle-même amenée à une deuxième entrée de la porte (59), en ce qu'une sortie du soustracteur (8a) valeur théorique/valeur effective est reliée à une deuxième entrée du multiplicateur (56) et en ce qu'une sortie de la porte (59) forme une sortie du circuit "anti-moulinet" (52), qui est amenée à une entrée du multiplicateur (47) de la partie intégrale (47; 48; 49).

11. Dispositif selon l'une des revendications 6, 7 ou 9, caractérisé en ce que l'agencement d'instruments de calcul (22a; 22b; 22c; 22d; 24a; 24b; 27; 23a; 23b; 25; 26; 29 à 32; 35; 36; 38; 41; 33; 34; 39; 40; 43) et éventuellement le circuit "anti-moulinet" (52) sont réalisés au moyen d'un micro-ordinateur.

Fig.1

Fig. 2

Fig. 3

EP 0 729 213 B1

Fig. 4

# Fig. 5

"2" ~31

30a

16a

$V_{i,R}[t]$

$V_{i,R}[t_k]$

32  ×

33  +

−

−

34  +  −

16b

30b

$V_{i,S}[t]$

$V_{i,S}[t_k]$

16c

$V_{i,T}[t]$

$V_{i,T}[t_k]$

30c

35  ×

36  ×

"3" ~37

38  ×

39  +  +

40  √

41  ×

$|IW_M|$

"3"  42

"1/3"  43

5b

EP 0 729 213 B1

Fig.6